(19)

Europäisches Patentamt

European Patent Office

Office européen des brevets

(11) **EP 4 374 989 A1**

(12) **EUROPEAN PATENT APPLICATION**

(43) Date of publication:
**29.05.2024 Bulletin 2024/22**

(21) Application number: **23205773.7**

(22) Date of filing: **25.10.2023**

(51) International Patent Classification (IPC):
**B22F 10/14** (2021.01)    **B22F 10/322** (2021.01)
**B22F 12/70** (2021.01)    **B29C 64/165** (2017.01)
**B29C 64/371** (2017.01)    **B33Y 30/00** (2015.01)
**G06F 30/28** (2020.01)

(52) Cooperative Patent Classification (CPC):
**B22F 12/70; B22F 10/14; B22F 10/322;**
**B29C 64/165; B29C 64/371; B33Y 30/00;**
**B33Y 50/02; G06F 30/28**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **17.11.2022 IN 202211065930**

(71) Applicant: **General Electric Company**
**Schenectady, NY 12345 (US)**

(72) Inventors:
• **JAISWAL, Shashwat Swami**
  **Schenectady, 12345 (US)**
• **PAL, Subrata**
  **Schenectady, 12345 (US)**
• **DE, Anindya Kanti**
  **Schenectady, 12345 (US)**
• **SHIBIYA, Cassidy C.**
  **Schenectady, 12345 (US)**
• **BROMBERG, Vadim**
  **Schenectady, 12345 (US)**
• **WHITE, Jack Bernard**
  **Schenectady, 12345 (US)**

(74) Representative: **Hafner & Kohl PartmbB**
**Schleiermacherstraße 25**
**90491 Nürnberg (DE)**

(54) **GAS DELIVERY SYSTEM OF AN ADDITIVE MANUFACTURING MACHINE**

(57) Embodiments of the present disclosure are directed to a gas flow delivery apparatus (300, 400, 500, 600) and systems (100) of an additive manufacturing system (10). The gas delivery apparatus (300, 400, 500, 600) comprises a first conduit (303, 403) having an elbow (308, 408) and an outer diameter DA and a second conduit (304, 404) fluidly coupled to the first conduit (303, 403) at a mixing region (305, 405). The mixing region (305, 405) is positioned downstream of the elbow (308, 408) of the first conduit (303, 403), and the mixing region (305, 405) is at least a distance Z from a center line of the second conduit (304, 404) to an end (313, 413) of the elbow (308, 408). A diffuser (510, 610) is fluidly coupled to the first conduit (303, 403) downstream of the mixing region (305, 405), the diffuser (510, 610) comprising an outlet (520) having a perforated plate (522).

FIG. 1
(PRIOR ART)

**Description**

**CROSS-REFERENCE TO RELATED APPLICATIONS**

This application claims the benefit of priority of Indian Application No. 202211065930, filed on November 17, 2022, and entitled Gas Delivery System of an Additive Manufacturing Machine, the contents of which are relied upon and incorporated herein by reference in their entirety as if fully set forth below.

**TECHNICAL BACKGROUND**

The present disclosure generally relates to additive manufacturing systems, and more particularly, to systems and methods for controlling an environment within an additive manufacturing system.

Additive manufacturing apparatuses may be utilized to form an object from build material, such as organic or inorganic powders, in a layer-wise manner. In an inert atmosphere, additive manufacturing processes such as directed energy deposition, electron beam melting, selective laser sintering, binder jetting, or powder bed fusion can take place without the risk of contamination from reactive gases that exist in the air, such as oxygen and carbon dioxide. Therefore, as iterations of additive manufacturing are engineered, finer and more reliable gas delivery systems are necessary.

**BRIEF DESCRIPTION OF THE DRAWINGS**

To easily identify the discussion of any particular element or act, the most significant digit or digits in a reference number refer to the figure number in which that element is first introduced.

FIG. 1 schematically depicts a process chamber with a gas flow delivery system, according to one or more aspects shown and described herein;

FIG. 2 schematically depicts an illustrative gas flow delivery apparatus according to one or more aspects shown and described herein;

FIG. 3 schematically depicts a perspective view of another illustrative gas flow delivery apparatus, according to one or more embodiments shown and described herein according to one or more aspects shown and described herein;

FIG. 4 schematically depicts a perspective view of yet another illustrative gas flow delivery apparatus, according to one or more embodiments shown and described herein according to one or more aspects shown and described herein;

FIG. 5 schematically depicts a perspective view of still another illustrative gas flow delivery apparatus, according to one or more embodiments shown and described herein according to one or more aspects shown and described herein;

FIG. 6A schematically depicts a perspective view of another illustrative gas flow delivery apparatus, according to one or more embodiments shown and described herein according to one or more aspects shown and described herein;

FIG. 6B schematically depicts a perspective view of an illustrative portion of a gas flow delivery apparatus, according to one or more embodiments shown and described herein according to one or more aspects shown and described herein;

FIG. 7A depicts a CFD model of the process composition profile at the diffuser exit of a gas flow delivery system, according to one or more aspects shown and described herein;

FIG. 7B depicts a CFD model of another illustrative process temperature profile at the diffuser exit of a gas flow delivery system, according to one or more aspects shown and described herein;

FIG. 7C depicts a CFD model of another illustrative process composition profile at the diffuser exit of a gas flow delivery system, according to one or more aspects shown and described herein;

FIG. 7D depicts a CFD model of another illustrative process temperature profile at the diffuser exit of a gas flow delivery system, according to one or more aspects shown and described herein;

FIG. 7E depicts a CFD model of yet another illustrative process composition profile at the diffuser exit of a gas flow delivery system, according to one or more aspects shown and described herein;

FIG. 7F depicts a CFD model of yet another illustrative process temperature profile at the diffuser exit of a gas flow delivery system, according to one or more aspects shown and described herein;

FIG. 7G depicts a CFD model of yet another illustrative process composition profile at the diffuser exit of a gas flow delivery system, according to one or more aspects shown and described herein;

FIG. 7H depicts a CFD model of yet another illustrative process temperature profile at the diffuser exit of a gas flow delivery system, according to one or more aspects shown and described herein;

FIG. 7I depicts a CFD model of yet another illustrative process velocity profile at the diffuser exit of a gas flow delivery system, according to one or more aspects shown and described herein;

FIG. 8A depicts a CFD model of yet another illustrative process velocity profile at the diffuser exit of a gas flow delivery system, according to one or more aspects shown and described herein;

FIG. 8B depicts a CFD model of yet another illustrative process composition profile at the diffuser exit of a gas flow delivery system, according to one or more aspects shown and described herein;

FIG. 8C depicts a CFD model of yet another illustrative process temperature profile at the diffuser exit of a gas flow delivery system, according to one or more aspects shown and described herein;

FIG. 8D depicts a CFD model of yet another illustrative process velocity profile at the diffuser exit of a gas flow delivery system, according to one or more aspects shown and described herein;

FIG. 8E depicts a CFD model of yet another process composition profile at the diffuser exit of a gas flow delivery system, according to one or more aspects shown and described herein;

FIG. 8F depicts a CFD model of yet another illustrative process temperature profile at the diffuser exit of a gas flow delivery system, according to one or more aspects shown and described herein;

FIG. 9A schematically depicts a perspective view of an illustrative gas flow delivery system, according to one or more aspects shown and described herein;

FIG. 9B depicts a CFD model of an illustrative process velocity profile at the diffuser exit of a gas flow delivery system, according to one or more aspects shown and described herein;

FIG. 9C depicts a CFD model of an illustrative process composition profile at the diffuser exit of a gas flow delivery system, according to one or more aspects shown and described herein;

FIG. 10A depicts a CFD model of an illustrative process velocity profile at the diffuser exit of a gas flow delivery system, according to one or more aspects shown and described herein;

FIG. 10B depicts a CFD model of another illustrative process composition profile at the diffuser exit of a gas flow delivery system, according to one or more aspects shown and described herein;

FIG. 10C depicts a CFD model of another illustrative process temperature profile at the diffuser exit of a gas flow delivery system, according to one or more aspects shown and described herein;

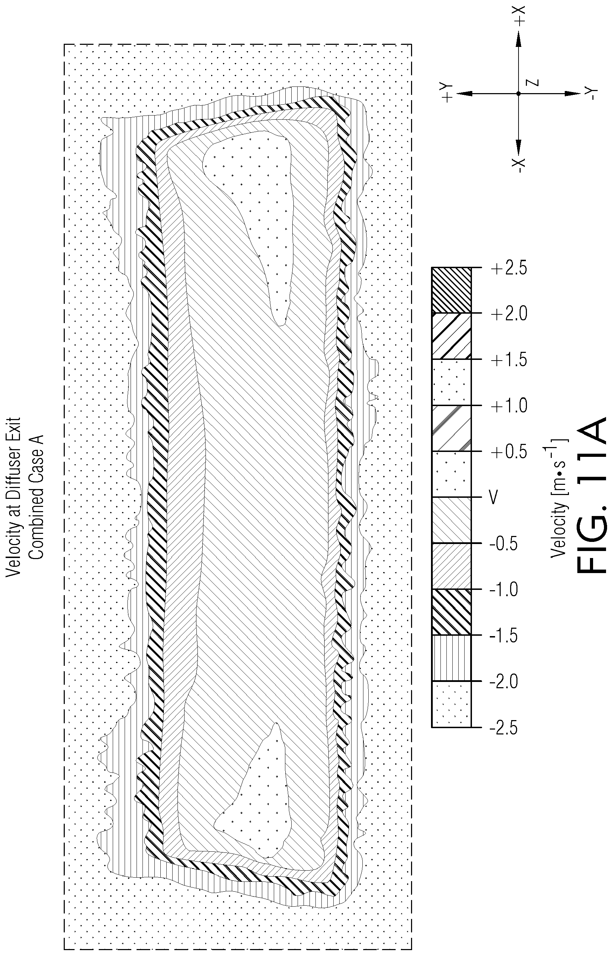

FIG. 11A depicts a CFD model of yet another illustrative process velocity profile at the diffuser exit of a gas flow delivery system, according to one or more aspects shown and described herein;

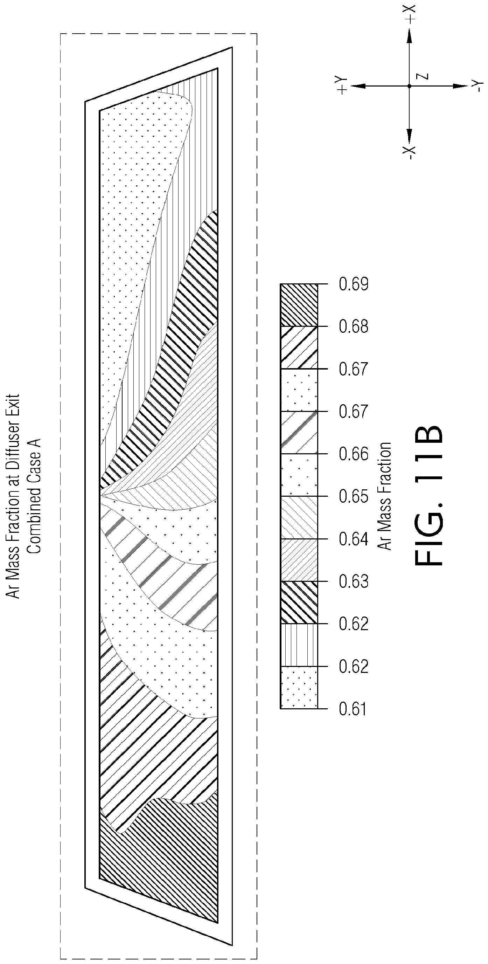

FIG. 11B depicts a CFD model of yet another illustrative process composition profile at the diffuser exit of a gas flow delivery system, according to one or more aspects shown and described herein; and

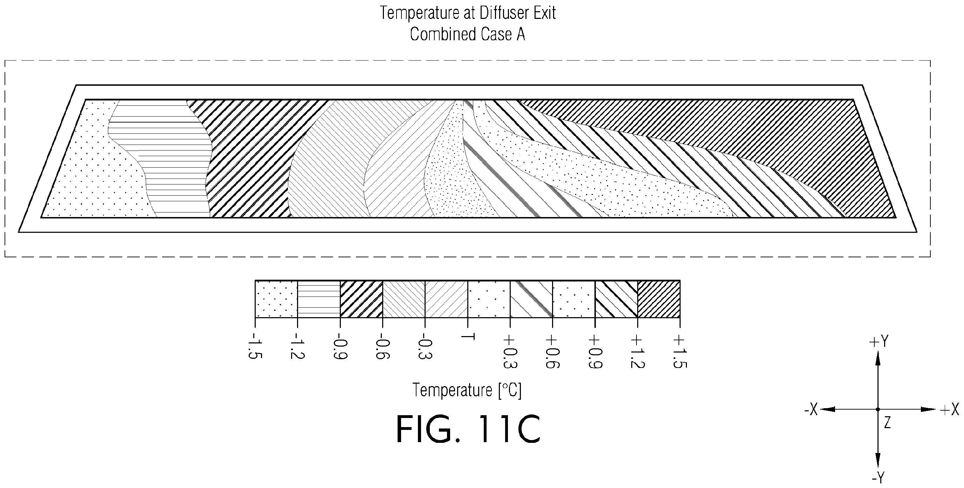

FIG. 11C depicts a CFD model of yet another illustrative process temperature profile at the diffuser exit of a gas flow delivery system, according to one or more aspects shown and described herein.

Additional features and advantages of the gas delivery system within an additive manufacturing apparatuses described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## DETAILED DESCRIPTION

Reference will now be made in detail to embodiments of fluid containment within additive manufacturing apparatuses. Whenever possible, the same reference numerals will be used throughout the drawings to refer to the same or like parts.

As used herein, the singular forms "a," "an" and "the" include plural referents unless the context clearly dictates otherwise. Thus, for example, reference to "a" component includes aspects having two or more such components, unless the context clearly indicates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", "near", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

As used herein, "mass fraction" refers to the composition of a component within a mixture. For a mixture, $w_i = \dfrac{m_i}{m_T}$, where $w_i$ is the mass fraction of the $i^{th}$ component, $m_i$ is the mass of the $i^{th}$ component, and $m_T$ is the total mass of the mixture. The total mass of a mixture is the sum of the mass of each component. The sum of all mass fractions of each component is equal to 1.

Having improved uniformity of gas flow parameters such as velocity, temperature, and vapor content allows for a better binder jetting process, as non-uniformity of these parameters affect powder flowability, binder curing, solvent evaporation, jetting, and the like within additive manufacturing systems. Current additive manufacturing machine aspects, such as the size of the build box, build plate, and process chamber, require the flow of gas to occur over a very short length, leaving too short of a time for adequate uniformity to develop within the gas.

Disclosed herein are gas delivery systems and apparatuses which mitigate the aforementioned problems within an additive manufacturing system such as system 10. Specifically, the gas delivery systems and apparatuses disclosed herein allow for more uniform velocities, temperatures, and vapor content within existing additive manufacturing systems' designs.

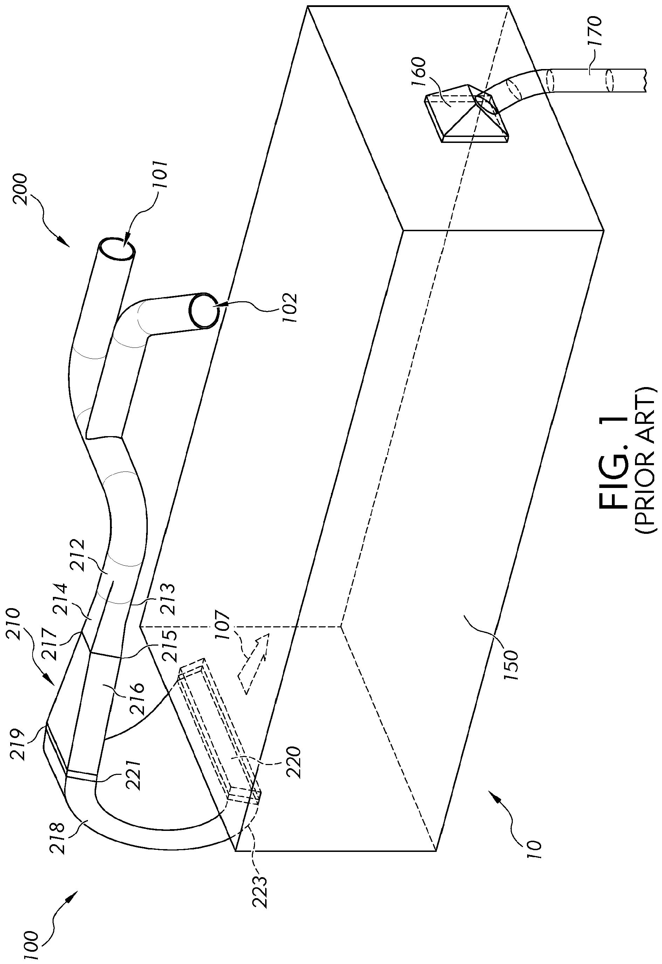

FIG. 1 illustrates , an additive manufacturing system 10. The additive manufacturing system 10 includes conventional gas delivery system 100 and a process chamber 150 fluidly coupled to a plurality of gas supplies, such as, for example, a first gas supply (not shown) and a second gas supply (not shown). The first gas supply and the second gas supply may be configured to deliver a gas (e.g., a first flow of gas 101 and a second flow of gas 102, respectively) to the process chamber 150. The first flow of gas 101 and the second flow of gas 102 may be delivered through a series of conduit fluidly coupling the gas supplies to the process chamber 150. That is, a conventional gas delivery apparatus 200 includes a first conduit 103 and a second conduit 104 extending from the first gas supply and the second gas supply, respectively, and joining together at a mixing region 105 to form a third conduit 106 that extends from the mixing region to the process chamber 150.

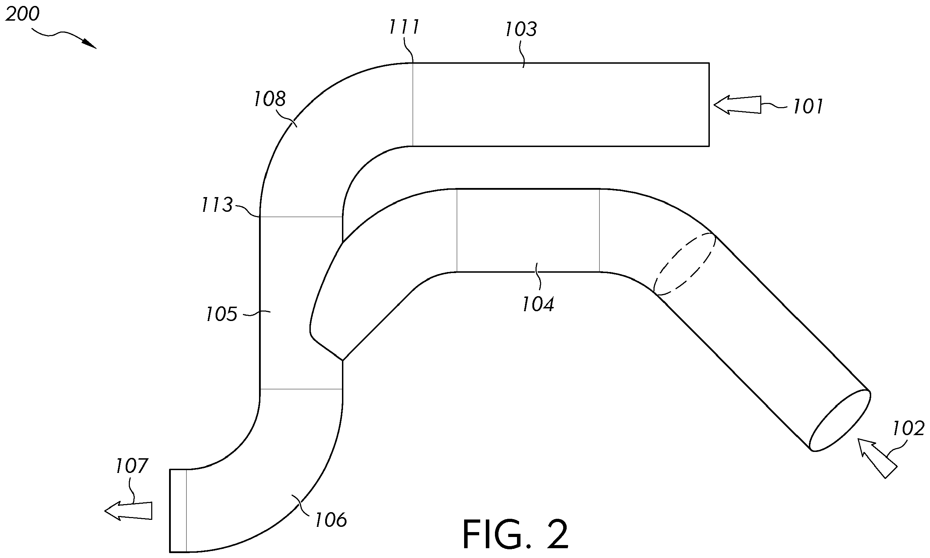

Accordingly, the conventional gas delivery system 100 includes a conventional diffuser 210 and a conventional gas delivery apparatus 200 (FIG. 2) where, in serial flow order, the first and second conduit 103, 104 upstream of the third conduit 106, which is upstream of the process chamber 150. The first conduit 103 includes a first end 111 spaced a distance apart from a second end 113 and is shaped to form an elbow 108 between the first end 111 and the second end 113 thereof. The mixing region 105 is generally located downstream of the elbow 108 of the first conduit 103 (e.g., at or near the second end 113 of the first conduit 103). The third conduit 106 may include or be in connection with the diffuser 210 disposed between the mixing region 105 and the process chamber 150.

The diffuser 210 (FIG. 1) includes an inlet 212 that is fluidly coupled to the third conduit 106 such that a mixed gas 107 enters the diffuser 210. The diffuser 210 includes, in serial flow order, an inlet 212, a first widening conduit 214, a second widening conduit 216, a turning conduit 218, and an outlet 220. The first widening conduit 214 includes a first end 213 spaced a distance apart from a second end 215 and has a cross-section that changes when traversed along a length of the first widening conduit 214. For example, the cross section may change from a circular shape to a rectangular shape between the first end 213 and the second end 215 thereof. It is also contemplated that there may be a change in the cross-sectional area from the first end 213 to the second end 215. Additionally, there may be a change in diameter from the first end 213 to the second end 215. The second widening conduit 216 includes a first end 217 spaced a distance apart from a second end 219. The second widening conduit 216 may have a cross section that changes in size when traversed along a length thereof. For example, the second widening conduit 216 has a cross-section that increases in rectangular diameter between the first end 217 and the second end 219 thereof. The turning conduit 218 directionally changes flow between a first end 221 and a second end 223 by 180 degrees (180°) (e.g., the flow changes from the negative z/x direction to the positive z/x direction) between the first end 217 and the second end 219 thereof. Additionally, the turning conduit 218 may have a cross section that changes in size when traversed along a length thereof.

As also depicted in FIG. 1, the process chamber 150 may include an outlet 160 formed in a wall thereof. The outlet 160 may provide an exhaust for gas to exit the process chamber 150 (e.g., such that gas flows out of the outlet 160 into a fourth conduit 170).

It should be understood that the gas delivery system 100 depicted in FIGS. 1 and 2 include different shaped conduits joined together at various points that causes the first and second gas to mix. The resulting mixed gas 107 has various properties, such as velocity, temperature, and composition (mass fraction) that may be nonuniform.

As discussed above, these disruptions of uniformity can lead to undesired effects of the powder flowability, binder curing, solvent evaporation, and jetting, among other things. The designs described hereinbelow increase uniformity of these parameters to ensure better performance within additive manufacturing machines.

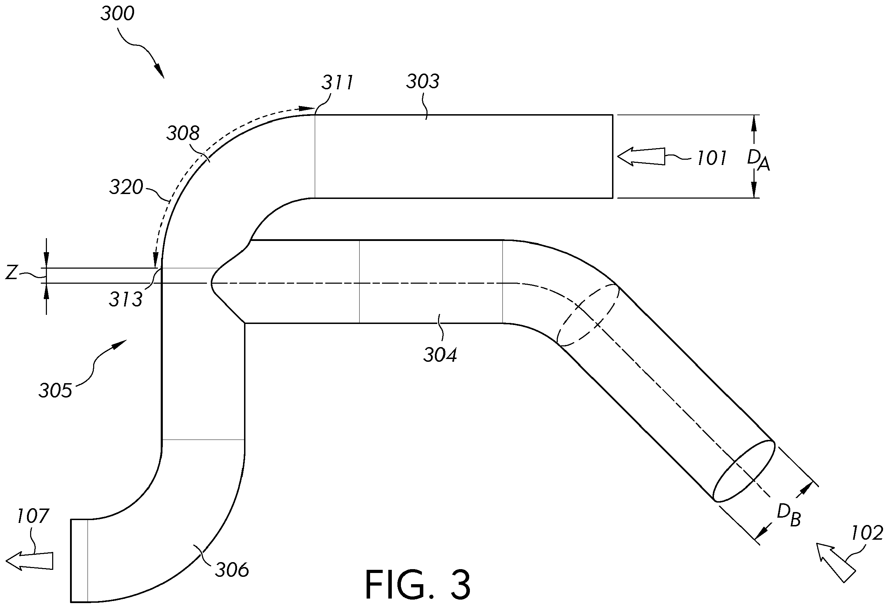

One embodiment of the present application employs the use of a T-junction to mitigate aforementioned issues in the conventional gas delivery system. Now referring to FIG. 3, an example of a T-junction within an gas delivery apparatus 300 is shown. The apparatus 300 includes a plurality of gas supplies, such as, for example, a first gas supply (not shown) and a second gas supply (not shown). The first gas supply and the second gas supply may be configured to deliver a gas (e.g., a first flow of gas 101 and a second flow of gas 102, respectively) to the process chamber 150 (depicted in FIG. 1). The first flow of gas 101 and the second flow of gas 102 may be delivered through a series of conduit fluidly coupling the gas supplies to the process chamber 150 (depicted in FIG. 1), the conduit being particularly shaped, sized, and arranged to ensure a particular characteristic of the gas that is delivered to the process chamber 150 (depicted in FIG. 1), as described in greater detail herein. That is, the apparatus 300 includes a first conduit 303 with a diameter $D_A$ and a second conduit 304 with a diameter $D_B$ extending from the first gas supply and the second gas supply, respectively, and joining together at a mixing region 305 to form a third conduit 306 that extends from the mixing region to the process chamber 150 (depicted in FIG. 1). It is contemplated that the apparatus 300 may be substituted for the apparatus 200 (FIG. 1 and FIG. 2). In these embodiments, the other elements of the system 10 (e.g., the diffuser 210) may remain unchanged.

Accordingly, the apparatus 300 includes, in serial flow order, the first and second conduit 303, 304 upstream of the third conduit 306, which is upstream of the process chamber 150 (depicted in FIG. 1). In embodiments, the first conduit 303 includes a first end 311 spaced a distance apart from a second end 313 and is shaped to form an elbow 308 between the first end 311 and the second end 313 thereof. The mixing region 305 is generally located downstream of the elbow 308 of the first conduit 303 (e.g., at or near the second end 313 of the first conduit 303). The particular positioning of the mixing region 305 relative to the elbow 308 ensures particular characteristics of the first and second flows of gases 101, 102 when they are combined at the mixing region to form mixed gas 107 that travels through the third conduit 306 to the process chamber 150 (depicted in FIG. 1). In the embodiment depicted in FIG. 3, the mixing region 305 may be located downstream of the elbow 308 such that the centerline of the second conduit 304 is a distance Z from the second end 313 of the first conduit 303. The second conduit 304 is otherwise perpendicular to the first conduit 303 before the first end 311. The value of Z is determined by the equation $Z = (0.75 * D_B) - (0.25 * D_B)$, where $D_B$ is the diameter of the second conduit 304. In embodiments, $D_B$ may be uniform across a length of the second conduit 304.

As the first gas 101 travels through the elbow 308, the gas is acted upon by centrifugal forces that disrupt the flow, forcing the first gas 101 toward an outer radius of the elbow 320. To combat these forces, the second gas 102 may be introduced at the closest position to the end of the elbow 308 to promote mixing. The closest position, the distance Z, is calculated based on the location of the end of the elbow 308 and the distance to the centerline of the second conduit 304.

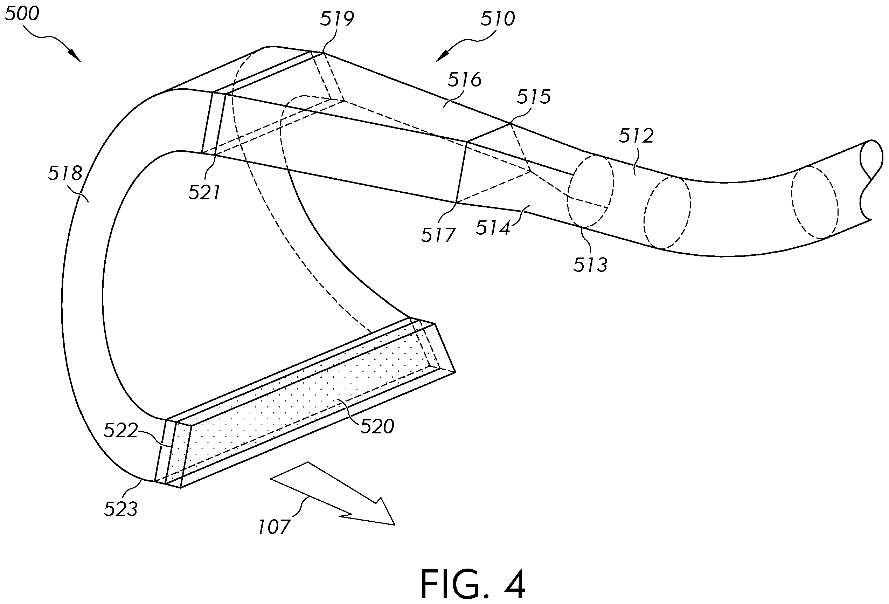

Another embodiment of the present application employs the use of a perforated plate in the gas delivery apparatus to further mitigate aforementioned issues in the conventional gas delivery system. Now referring to FIG. 4, a portion of a gas delivery system 500 is shown. The gas delivery system 500 may also include a gas delivery apparatus 300 (FIG. 3) in addition to a diffuser 510 (FIG. 4) that includes an inlet 512 that is fluidly coupled to a conduit (e.g., the third conduit 306 depicted in FIG. 3) such that a mixed gas enters the diffuser 510 at the inlet 512. The diffuser 510 includes, in serial flow order, the inlet 512, a first widening conduit 514, a second widening conduit 516, a turning conduit 518, a perforated plate 522, and an outlet 520. The first widening conduit 514 includes a first end 513 spaced a distance apart from a second end 515 and has a cross-section that changes from circular to rectangular between the first end 513 and the second end 515 thereof. The second widening conduit 516 includes a first end 517 spaced a distance apart from a second end 519 and has a cross-section that increases in rectangular diameter between the first end 517 and the second end 519 thereof. The turning conduit 518 includes a first end 521 spaced a distance apart from a second end 523 that directionally changes the flow by 180° (e.g., the flow changes from the negative z/x direction to the positive z/x direction) between the first end 517 of the second widening conduit 516 and the second end 523 of the turning conduit 518. Additionally, the cross-section increases between the turning conduit's first end 521 and the second end 523.

The perforated plate 522 may be affixed to the outlet 520 of the diffuser 510 such that the mixed gas 107 exits through the perforated plate 522. Additionally, various elements of the perforated plate 522 may be tuned to ensure particular characteristics of the mixed gas 107 that enters the process chamber 150 (depicted in FIG. 1). The tunable factors may be, but are not limited to, the porosity of the perforated plate 522, the thickness of the perforated plate 522, and the hole size of the perforated plate 522. As used herein, "hole size" refers to the diameter of each hole in the perforated plate. The holes in the plate may not always be uniform, and so porosity may be more indicative of the surface area available on the perforated plate facing the flow. For example, a porosity of 7% corresponds to a perforated plate having the equivalent of 7% of its surface area open due to the presence of holes. It is contemplated that the diffuser 510 may be substituted for the diffuser 210 (FIG. 1). In these embodiments, the other elements of the system 10 (e.g., the apparatus 200) may remain unchanged.

In embodiments, the porosity of the perforated plate may be greater than or equal to about 4% and less than or equal to about 50%. In embodiments, the porosity of the perforated plate may be greater than or equal to about 7% and less than or equal to about 25%. In embodiments, the porosity of the perforated plate may be greater than or equal to about 4%, greater than or equal to about 5%, greater than or equal to about 6%, or even greater than or equal to about 7%. In embodiments, the porosity of the perforated plate be less than or equal to about 50%, less than or equal to about 45%, less than or equal to about 40%, or even less than or equal to about 35%. In embodiments, the porosity of the plates may be greater than or equal to 4% and less than or equal to about 50%, greater than or equal to about 4% and less than or equal to about 45%, greater than or equal to about 4% and less than or equal to about 40%, greater than or equal to about 4% and less than or equal to about 35%, greater than or equal to about 5% and less than or equal to about 50%, greater than or equal to about 5% and less than or equal to about 45%, greater than or equal to about 5% and less than or equal to about 40%, greater than or equal to about 5% and less than or equal to about 35%, greater than or equal to about 6% and less than or equal to about 50%, greater than or equal to about 6% and less than or equal to about 45%, greater than or equal to about 6% and less than or equal to about 40%, greater than or equal to about 6% and less than or equal to about 35%, greater than or equal to about 7% and less than or equal to about 50%, greater than or equal to about 7% and less than or equal to about 45%, greater than or equal to about 7% and less than or equal to about 40%, greater than or equal to about 7% and less than or equal to about 35%, or any and all sub-ranges formed from any of these endpoints.

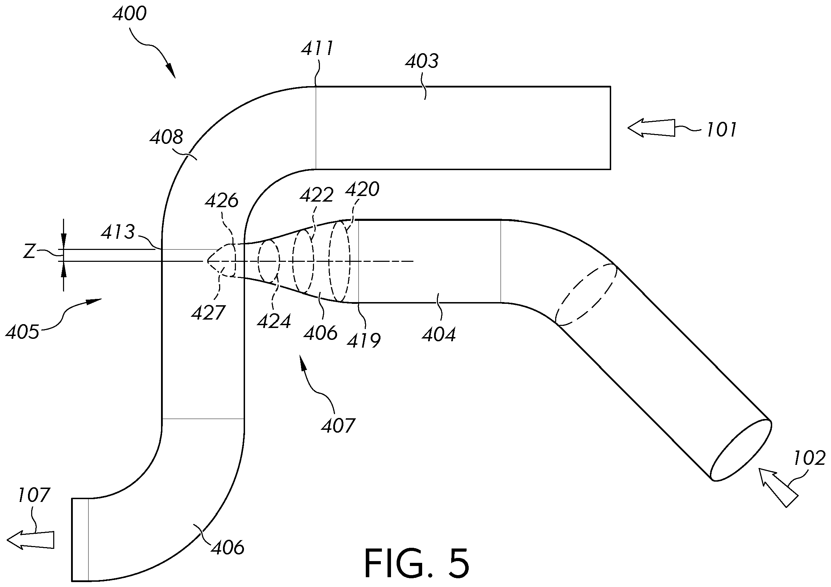

Another embodiment of the present application employs tangential entry for the connection between the first and second conduits. Now referring to FIG. 5, an example of a tangential entry for a conduit in a gas delivery apparatus 400 is shown. The gas delivery apparatus 400 includes a plurality of gas supplies, such as, for example, a first gas supply (not shown) and a second gas supply (not shown). The first gas supply and the second gas supply may be configured to deliver a gas (e.g., a first flow of gas 101 and a second flow of gas 102, respectively) to the process chamber 150 (depicted in FIG. 1). The first flow of gas 101 and the second flow of gas 102 may be delivered through a series of conduit fluidly coupling the gas supplies to the process chamber 150 (depicted in FIG. 1), the conduit being particularly shaped, sized, and arranged to ensure a particular characteristic of the gas that is delivered to the process chamber 150 (depicted in FIG. 1), as described in greater detail herein. That is, the apparatus 400 includes a first conduit 403 and a second conduit 404 extending from the first gas supply and the second gas supply, respectively, and joining together at a mixing region 405 to form a third conduit 406 that extends from the mixing region to the process chamber 150 (depicted in FIG. 1). It is contemplated that the apparatus 400 may be substituted for the apparatus 200 (FIG. 1 and FIG. 2). In these embodiments, the other elements of the system 10 (e.g., the diffuser 210) may remain unchanged.

Accordingly, the apparatus 400 includes, in serial flow order, the first and second conduit 403, 404 upstream of the third conduit 406, which is upstream of the process chamber 150 (depicted in FIG. 1). In embodiments, the first conduit 403 includes a first end 411 spaced a distance apart from a second end 413 and is shaped to form an elbow 408 between the first end 411 and the second end 413 thereof. The mixing region 405 is generally located downstream of the elbow 408 of the first conduit 403 (e.g., at or near the second end 413 of the first conduit 403). The particular positioning of the mixing region 405 relative to the elbow 408 ensures particular characteristics of the first and second flows of gases 101, 102 when they are combined at the mixing region to form a mixed gas 107 that travels through the third conduit 406 to the process chamber 150 (depicted in FIG. 1).

In embodiments, the second conduit 404 includes a first end 419 spaced a distance apart from a second end 427 and is shaped to form a funnel outlet 407 between the first end 419 and the second end 427 thereof. The funnel outlet 407 includes, in serial flow order, a first diameter 420, a second diameter 422, a third diameter 424, and a final diameter 426. Each of the diameters 420, 422, 424, and 426 serially decrease to form a funnel-like shape of the funnel outlet 407. That is, the first diameter 420 is larger than the second diameter 422, the second dimeter 422 is larger than the third diameter 424, and the third diameter 424 is larger than the final diameter 426. It is contemplated that these diameters gradually decrease over the length of the funnel outlet 407. In other words, the second conduit 404 may have a diameter $D_B$ that decreases across a length near the mixing region, the length where $D_B$ decreases being the length of the funnel outlet 407.

In the embodiment depicted in FIG. 5, the mixing region 405 may be located downstream of the elbow 408 such that the centerline of the second conduit 404 is a distance Z from the second end 413 of the first conduit 403. The second conduit 404 is otherwise perpendicular to the first conduit 403 before the first end 411. The value of Z is determined by the equation Z = (0.75 * Dz) - (0.25 * Dz), where Dz is the diameter of the second conduit 404 at the final diameter 426 at the mixing region.

The funnel outlet 407 is an alternative to the T-junction detailed in FIG. 3. The funnel outlet 407 provides a different mechanism to dissipate some of the effects of the centrifugal force. Specifically, as the second gas 102 exits the funnel outlet 407 that serially decreases in cross-sectional area, the second gas 102 mixes with the first gas 101 in a swirling motion. The swirling motion is caused by the perpendicular, tangential placement of the funnel outlet 407 to the side of the third conduit 406, such that the second gas 102 is forced into the third conduit 406 in a circular motion.

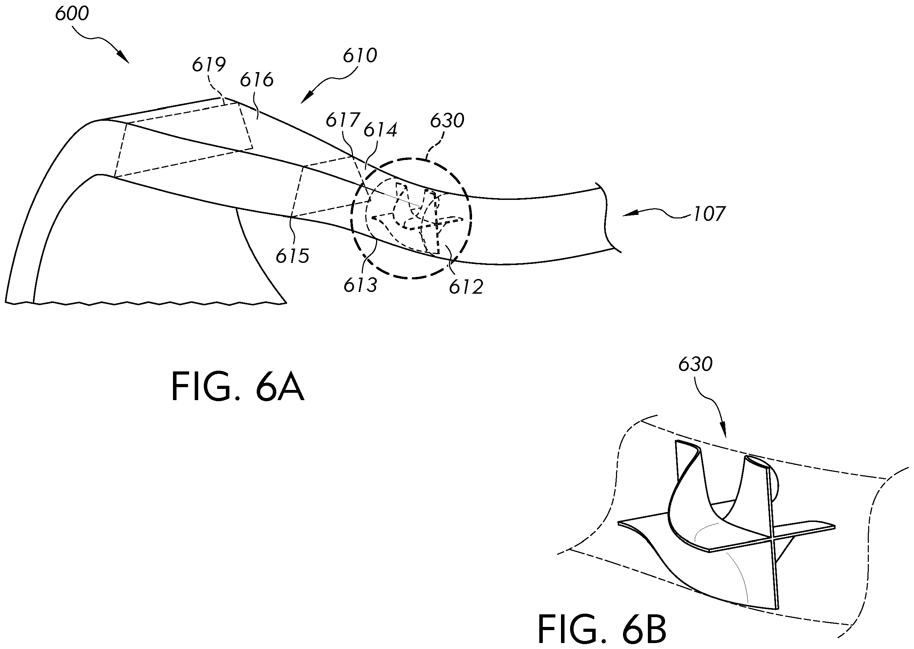

Another embodiment of the present application employs a swirler for further mixing of the mixed gas 107. FIG. 6A shows an example of a swirler 630 in an gas delivery system 600. The gas delivery system 600 includes a gas delivery apparatus (FIG. 3, FIG. 4, FIG. 5) and diffuser 610 that includes an inlet 612 that is fluidly coupled to a conduit (e.g., the third conduit 306 depicted in FIG. 3) such that a mixed gas enters the diffuser 610. The diffuser 610 includes, in serial flow order, the inlet 612, a first widening conduit 614, a second widening conduit 616, a turning conduit 218 (depicted in FIG. 1), and an outlet 220 (depicted in FIG. 1). The first widening conduit 614 includes a first end 613 spaced a distance apart from a second end 615 and has a cross-section that changes from circular to rectangular between the first end 613 and the second end 615 thereof. The first widening conduit 614 may include the swirler 630, as depicted in FIG. 6A. The swirler 630 may possess certain characteristics and/or be particularly located within the first widening conduit 614 to ensure the mixed gas 107 has particular characteristics as it enters a process chamber (e.g., the process chamber 150 depicted in FIG. 1). The second widening conduit 616 includes a first end 617 spaced a distance apart from a second end 619 and has a cross-section that increases in rectangular diameter between the first end 617 and the second end 619 thereof. FIG. 6B illustrates one embodiment of the shape and structure of the swirler 630 as integrated into the system 600. It is contemplated that the diffuser 610 may be substituted for the diffuser 210 (FIG. 1). In these embodiments, the other elements of the system 10 (e.g., the apparatus 200) may remain unchanged.

## EXAMPLES

In order that various embodiments be more readily understood, reference is made to the following examples, which are intended to illustrate various embodiments of the gas delivery systems described herein.

As mentioned hereinabove, the mixed gas has properties such as velocity, mass fraction, and temperature as it enters the process chamber 150. According to embodiments described hereinabove, the system may possess certain characteristics corresponding to particular geometrical designs of a series of conduits to control these properties. These properties may be measured by computation fluid dynamic (CFD) modeling using, for example, Ansys CFX (Ansys, Inc., Canonsburg PA).

In embodiments, the gas delivery system delivers a gas to the process chamber with a minimal velocity variation ($\Delta v$), a minimal gas mass fraction variation ($\Delta w$), and a minimal temperature variation ($\Delta T$). The term "minimal" as used in these definitions means less variation than is present in a conventional gas delivery system as depicted in FIGS. 1, 2, and 3A-3C. Stated otherwise, the gas, as measured at the diffuser exit, in the following embodiments of the present disclosure include more uniform $\Delta v$, $\Delta w$, and $\Delta T$ than a conventional gas delivery system.

In embodiments, the change in velocity, or minimal velocity variation ($\Delta v$) is less than or equal to about 4.00 m/s, less than or equal to about 3.50 m/s, less than or equal to about 3.00 m/s, less than or equal to about 2.5 m/s, or even less than or equal to about 2.0 m/s, or any and all sub-ranges formed from any of these endpoints. In addition to the overall velocity change, the velocity profiles shown at the outlet 220 of the diffuser 210 in the figures below should be examined for uniformity and relatively large increases in velocity over short areas.

In embodiments, the composition, or minimal mass fraction variation ($\Delta w$) is less than or equal to about 0.3. In embodiments, $\Delta w$ may be less than or equal to about 0.3, less than or equal to about 0.25, less than or equal to about 0.20, less than or equal to about 0.9, less than or equal to about 0.08, less than or equal to about 0.07, less than or equal to about 0.06, less than or equal to about 0.05, less than or equal to about 0.04, or even less than or equal to about 0.03, or any and all sub-ranges formed from any of these endpoints. In addition to the overall composition profile, the mass fraction shown at the outlet 220 of the diffuser 210 in the figures below should be examined for uniformity and any anomalies across the profile.

In embodiments, the change in temperature, or minimal temperature variation, ($\Delta T$), is less than or equal to about T $\pm$ 2.0 °C. In embodiments, $\Delta T$ may be less than or equal to about $\pm$ 2.0 °C, less than or equal to about $\pm$ 1.8 °C, less than or equal to about $\pm$ 1.6 °C, less than or equal to about $\pm$ 1.4 °C, less than or equal to about $\pm$ 1.2°C, less than or equal to about $\pm$ 1.0 °C, less than or equal to about $\pm$ 0.8 °C, less than or equal to about $\pm$ 0.6°C, or even less than or equal to about $\pm$ 0.4 °C, or any and all sub-ranges formed from any of these endpoints. In addition to the overall change in temperature, the temperature profile shown at the outlet 220 of the diffuser 210 in the figures below should be examined for uniformity and any anomalies across the temperature profile.

In embodiments, the diameter of the conduits may be greater than or equal to about 10 mm and less than or equal to about 70 mm. In embodiments, the diameters of the conduits may be greater than or equal to about 25 mm and less than or equal to about 35 mm. In embodiments, the diameter of the conduits may be greater than or equal to about 10 mm, greater than or equal to about 15 mm, greater than or equal to about 20 mm, or even greater than or equal to about 25 mm. In embodiments, the diameter of the conduits may be less than or equal to about 70 mm, less than or equal to about 65 mm, less than or equal to about 60 mm, or even less than or equal to about 55 mm. In embodiments, the diameter of the conduits may be greater than or equal to about 10 mm and less than or equal to about 70 mm, greater than or equal to about 10 mm and less than or equal to about 65 mm, greater than or equal to about 10 mm and less than or equal to about 60 mm, greater than or equal to about 10 mm and less than or equal to about 55 mm, greater than or equal to about 15 mm and less than or equal to about 70 mm, greater than or equal to about 15 mm and less than or equal to about 65 mm, greater than or equal to about 15 mm and less than or equal to about 60 mm, greater than or equal to about 15 mm and less than or equal to about 55 mm, greater than or equal to about 20 mm and less than or equal to about 70 mm, greater than or equal to about 20 mm and less than or equal to about 65 mm, greater than or equal to about 20 mm and less than or equal to about 60 mm, greater than or equal to about 20 mm and less than or equal to about 55 mm, greater than or equal to about 25 mm and less than or equal to about 70 mm, greater than or equal to about 25 mm and less than or equal to about 65 mm, greater than or equal to about 25 mm and less than or equal to about 60 mm, or even greater than or equal to about 25 mm and less than or equal to about 55 mm, or any and all sub-ranges formed from any of these endpoints.

In each of the following examples, the diameter of two conduits remained constant at 32 mm. However, it is contemplated that in other embodiments, the diameters of the conduits could be different from each other and there may be more than two conduits. Additionally, in each example, the conduits receive initial argon gas at different temperatures within the range of T $\pm$ 50 °C, where T is a preferred or predetermined temperature of the resulting mixture of argon streams.

## T-Junction Design (as illustrated in FIG. 3)

To determine the value for Z for a given diameter that is most conducive to achieve superior velocity, mixing, and temperature results for the mixed gas when compared to a conventional gas delivery system, four different distances were simulated using CFD modeling. Based on the diameter of 32 mm selected for this example, four different Z values were chosen: 16 mm, 32 mm, 66 mm, and 160 mm. In the following examples, only the apparatus 200 was substituted into the system 10, and the diffuser 210 remained unchanged.

*Example 1 - TJ1*

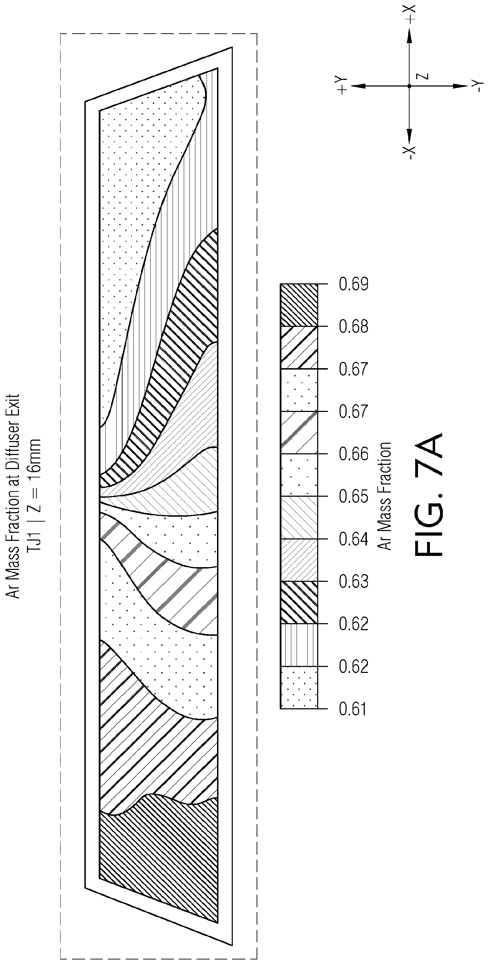

In the first example, TJ1, Z is 16 mm. Referring again to FIG. 3, this value is the minimum amount of distance possible between the centerline of the second conduit 302 and the end of the elbow 308 of the first conduit 303 with a diameter of 32 mm for the first conduit 303. Now referring to FIG. 7A, a CFD model of the composition, or mass fraction, of argon gas at the outlet 220 of the diffuser 210 (both shown in FIG. 1) is depicted. As shown, the mass fraction at various areas of the exit of the diffuser ranges from about 0.63 to about 0.64, for a $\Delta w$ of about 0.01. As seen in FIG.

7A, the mass fraction between 0.63 and 0.64 over the entire area of the outlet 220.

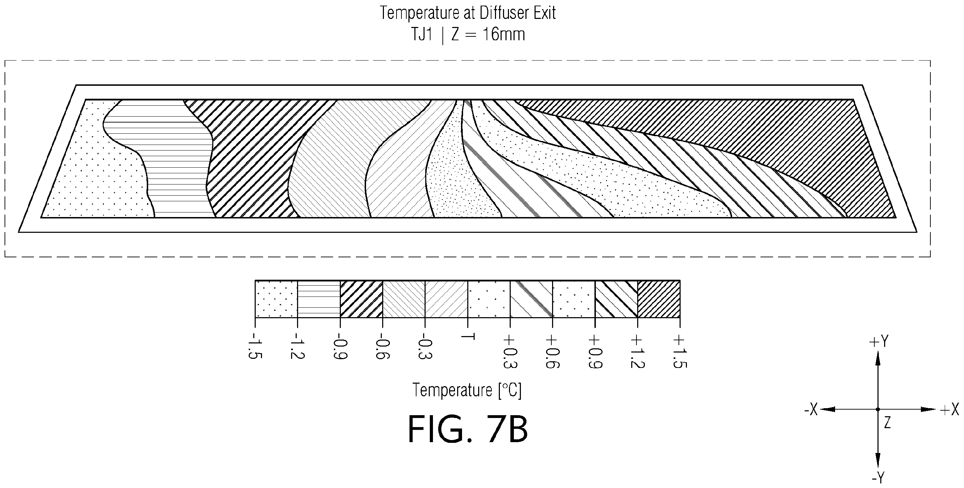

Now referring to FIG. 7B, a CFD model of the temperature profile of the mixed gas 107 across the outlet 220 of the diffuser 210 (both shown in FIG. 1) is depicted for TJ1. As shown, the temperature at various areas of the outlet 220 of the diffuser 210 ranges from about T $\pm$ 0.2 °C, for a $\Delta$T of about 0.4 °C.

*Example 2 - TJ2*

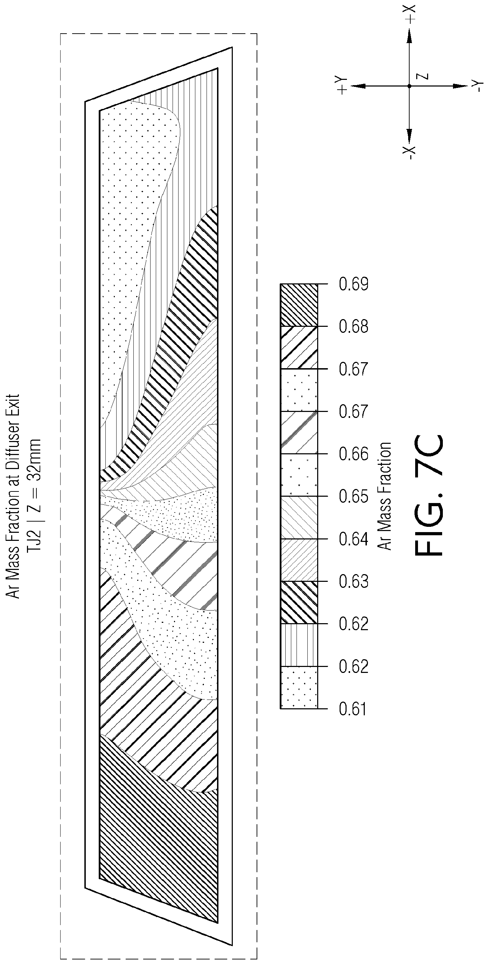

In the second example, TJ2, Z is 32 mm. Now referring to FIG. 7C, a CFD model of the composition, or mass fraction, of argon gas at the outlet 220 of the diffuser 210 (both shown in FIG. 1) is depicted. As shown, the mass fraction at various areas of the outlet 220 of the diffuser 210 ranges from about 0.63 to about 0.65, for a $\Delta$w of about 0.02. However, the $\Delta$w in FIG. 7C is also slightly larger than TJ1, where the $\Delta$w was about 0.01.

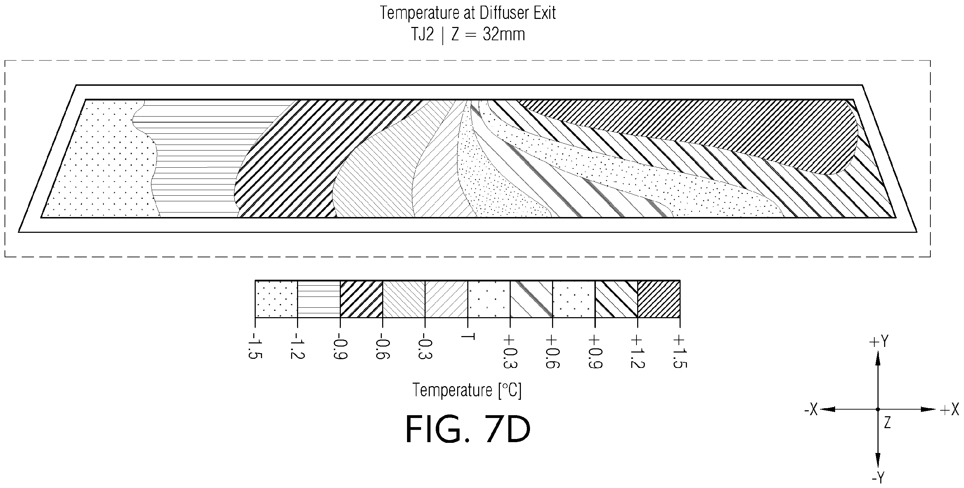

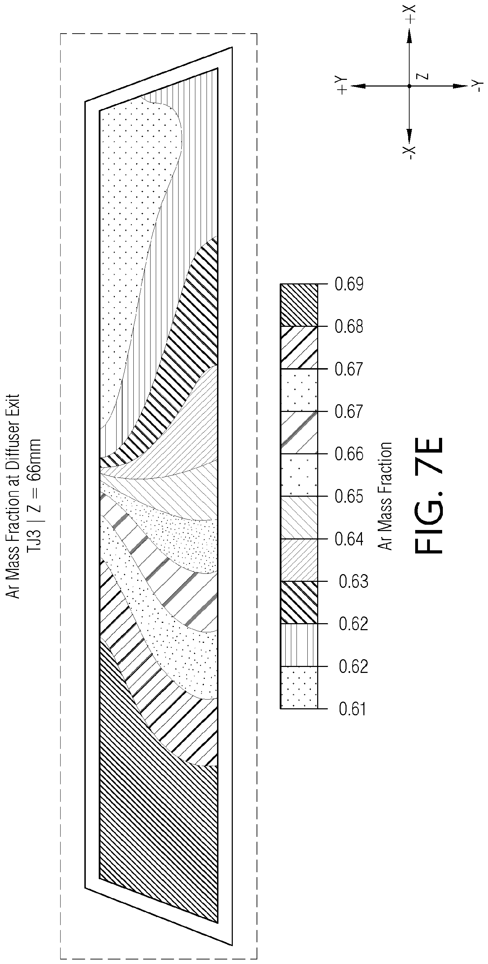

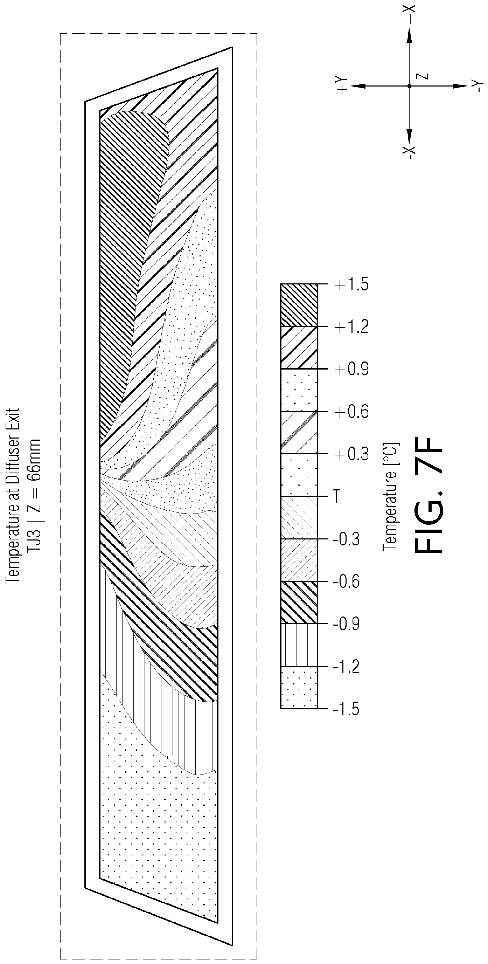

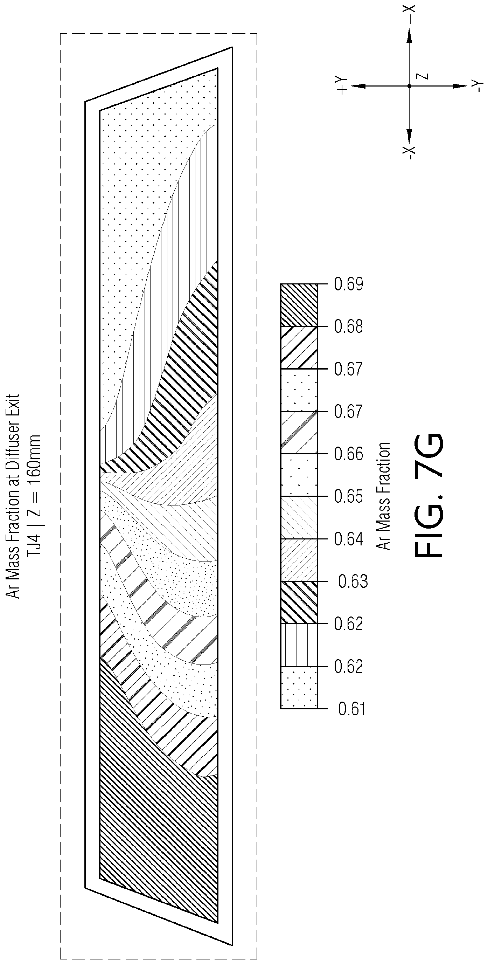

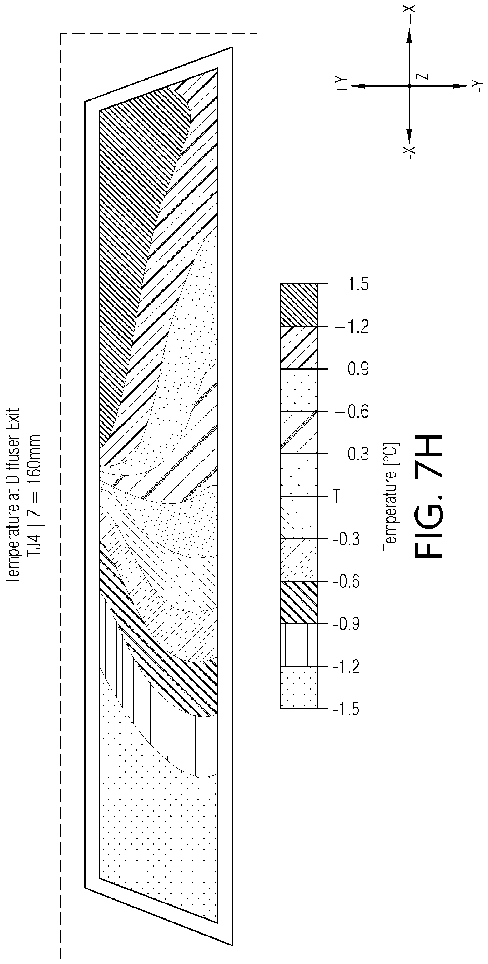

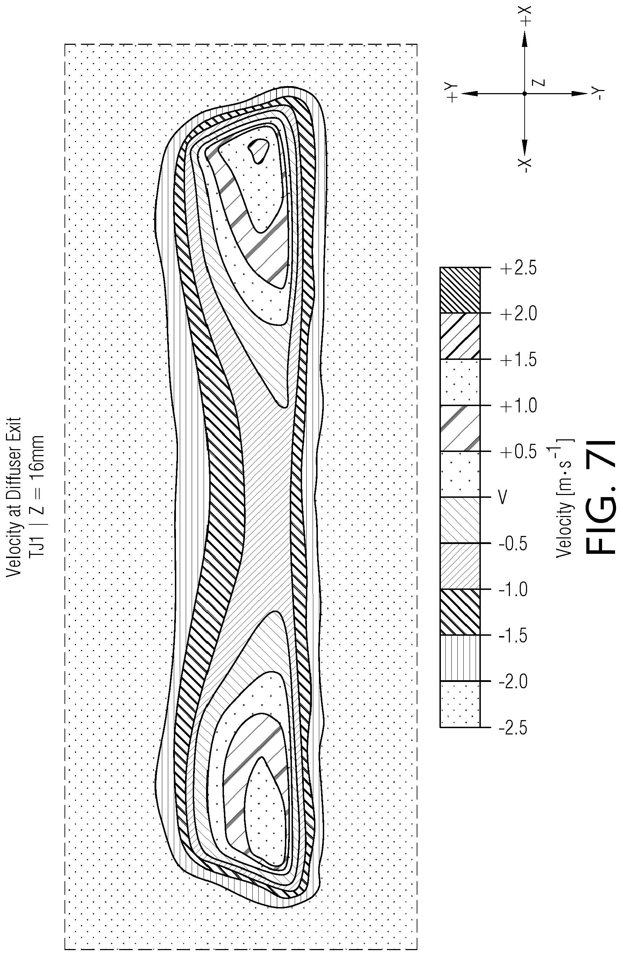

Now referring to FIG. 7D, a CFD model the temperature profile of the mixed gas 107 across the outlet 220 of the diffuser 210 (both shown in FIG. 1) is depicted for TJ2. As shown, the temperature at various areas of the outlet 220 of the diffuser 210 ranges from T $\pm$ about 0.38 °C, for a $\Delta$T of about 0.76 °C, or about 0.8 °C. FIG. 7

*Example 3 - TJ3*

In the third example, TJ3, Z is 66 mm. Now referring to FIG. 7E, a CFD model of the composition, or mass fraction, of argon gas at the outlet 220 of the diffuser 210 (both shown in FIG. 1) is depicted. As shown, the mass fraction at various areas of the outlet 220 of the diffuser 210 ranges from about 0.61 to about 0.67, for a $\Delta$w of about 0.06. The $\Delta$w is larger than the mass fraction seen in TJ1 and TJ2, where $\Delta$w was about 0.01 and about 0.02, respectively.

Now referring to FIG. 7F, a CFD model of the temperature profile of the mixed gas 107 across the outlet 220 of the diffuser 210 (both shown in FIG. 1) is depicted for TJ3. As shown, the temperature at various areas of the outlet 220 of the diffuser 210 ranges from about T $\pm$ 1.1 °C, for a $\Delta$T of about 2.2 °C. The $\Delta$T is larger than the temperature change seen in TJ1 and TJ2, where $\Delta$T was about 0.4 °C and about 0.8 °C, respectively.

*Example 4 - TJ4*

In the fourth and final example of the T-junction design, TJ4, Z is 160 mm. Now referring to FIG. 7G, a CFD model of the composition, or mass fraction, of argon gas at the outlet 220 of the diffuser 210 (both shown in FIG. 1) is depicted. As shown, the mass fraction at various areas of the outlet 220 of the diffuser 210 ranges from about 0.61 to about 0.68, for a $\Delta$w of about 0.07. The $\Delta$w is larger than the mass fraction seen in TJ1, TJ2, and TJ3 where $\Delta$w was about 0.01, about 0.02, and about 0.06, respectively.

Now referring to FIG. 7H, a CFD model of the temperature profile of the mixed gas 107 across the outlet 220 of the diffuser 210 (both shown in FIG. 1) is depicted for TJ4. As shown, the temperature at various areas of the outlet 220 of the diffuser 210 ranges from about T $\pm$ 1.5 °C, for a $\Delta$T of about 3 °C. It is larger than the temperature change seen in TJ1, TJ2, and TJ3 where $\Delta$T was about 0.4 °C, about 0.8 °C, and about 2.2 °C respectively.

**Table 1**

| Case | Z (mm) | $\Delta$w (m/s) | $\Delta$T (°C) |
|---|---|---|---|
| TJ1 | 16 | 0.01 | 0.4 |
| TJ2 | 32 | 0.02 | 0.8 |
| TJ3 | 66 | 0.06 | 2.2 |
| TJ4 | 160 | 0.07 | 3.0 |

Table 1 above summarizes the properties of mixed gas in each of the various T-Junction designs described above. Based on this data, smaller distance z values between the elbow 308 of the first conduit 303 in FIG. 3, seen in example TJ1, achieves the best mixing of argon gas. As described hereinabove, the z value is dependent upon the diameter of the conduit. The minimum z distance may therefore be considered the distance between the end of the elbow 308 (FIG. 3) to the centerline of the conduit.

Now referring to FIG. 7I, CFD model of the velocity at the outlet 220 of the diffuser 210 (both shown in FIG. 1) is depicted for TJ1. As shown, the velocities at various areas of the exit of the diffuser range from about V $\pm$ 2.0 m/s for a velocity change, or $\Delta$v, of about 4.00 m/s. However, the velocity varies at many points within the outlet 220 of the diffuser 210. As depicted, the velocity changes more quickly in the corners of the model corresponding to the negative y and positive x quadrant and the negative y and negative x quadrant. This total area comprises roughly 50% of the total area of the outlet 220 of the diffuser 210, and the velocity increases from about the velocity V to about V + 2.0 m/s. The rest of the velocity profile is within a range of about V - 2 m/s to about V - 0.5 m/s. It can therefore be understood that this the area containing about a 2.0 m/s increase over 50% of the total area can be disruptive to the rest of the gas flow. Said differently, while TJ1 may achieve better composition and temperature when mixing the gases, TJ1 does not necessarily achieve a desirable $\Delta v$.

**Perforated Plate Design (as illustrated in FIG. 4)**

For the perforated plate design, two different porosities were simulated using CFD modeling. PP1 includes a porosity of 7% while PP2 includes a porosity of 25%. Both PP1 and PP2 have the same thickness of 3 mm.

*Example 1 - PP1*

In the first example, PP1, the porosity of the perforated plate 522 is 7%, the thickness of the perforated plate 522 is 3 mm. PP1 utilizes a hole size of 2.0 mm to achieve the stated porosity.

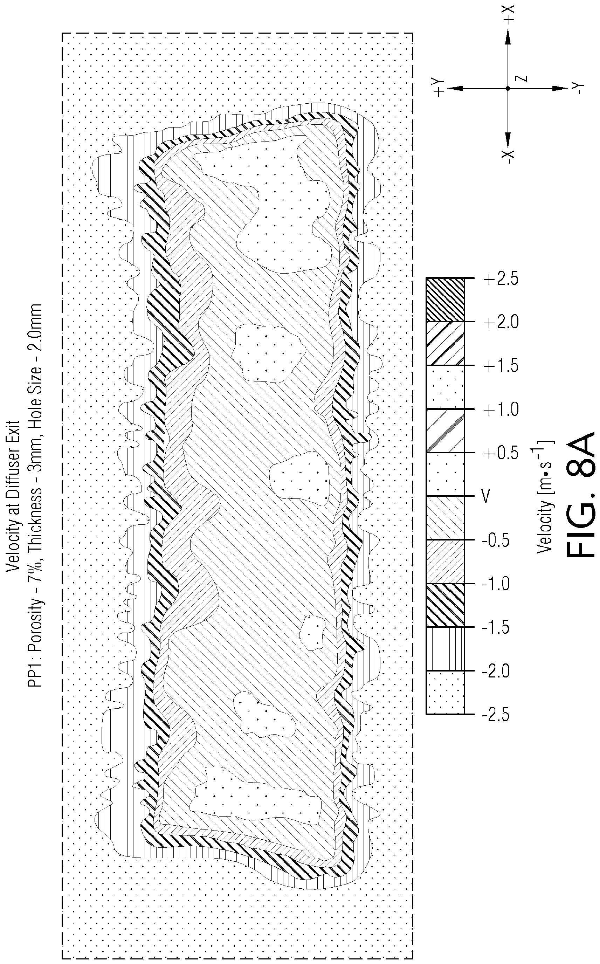

Now referring to FIG. 8A, a CFD model of the velocity at the outlet 520 of the diffuser 510 is depicted for PP1. As shown, the velocity ranges from about V - 2.00 m/s to about V + 0.5 m/s, for a $\Delta v$ of about 2.5 m/s. Additionally, in FIG. 8A, about 80% of the velocity profile area is within about V - 0.5 m/s to about V m/s.

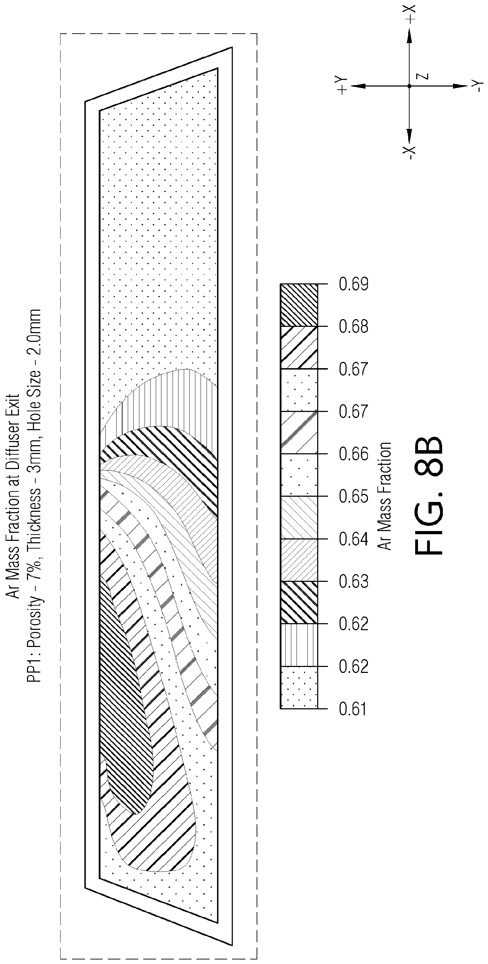

Now referring to FIG. 8B, a CFD model of the composition, or mass fraction, of argon gas at the outlet 520 of the diffuser 510 is depicted for PP1. As shown, the mass fraction at various areas of the outlet 520 of the diffuser 510 ranges from about 0.61 to about 0.69, for a $\Delta w$ of about 0.08.

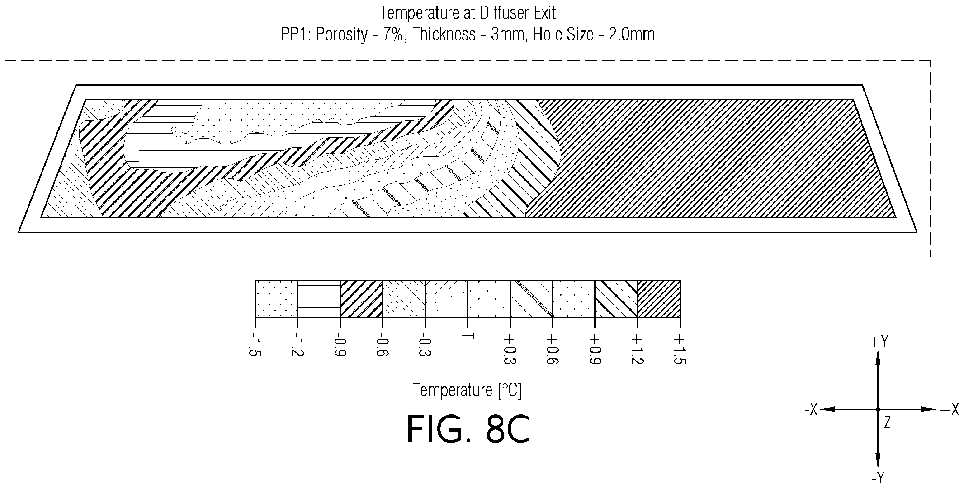

Now referring to FIG. 8C, a CFD model of the temperature profile of the mixed gas 107 across the outlet 520 of the diffuser 510 is depicted for PP1. As shown, the temperature at various areas of the outlet 520 of the diffuser 510 ranges from T $\pm$ 1.35 °C, for a $\Delta T$ of 2.7° C.

*Example 2 - PP2*

In the second example, PP2, the porosity of the perforated plate 522 is 25%, the thickness of the perforated plate 522 is 3 mm. PP2 utilizes a hole size of 3.5 mm to achieve the stated porosity.

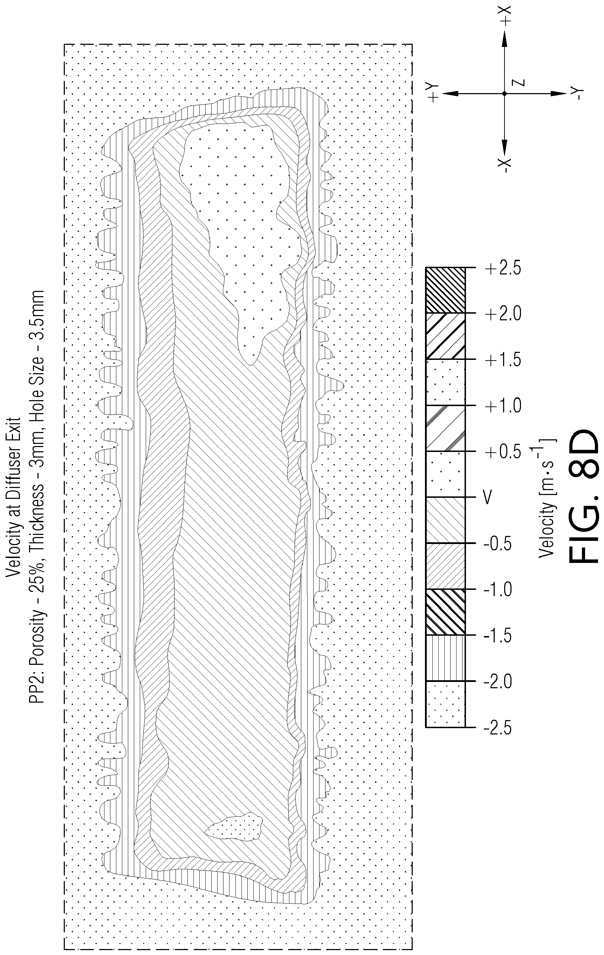

Now referring to FIG. 8D, a CFD model of the velocity at the outlet 520 of the diffuser 510 is depicted for PP2. As shown, the velocity ranges from V - 2.00 m/s to about V + 0.5 m/s, for a $\Delta v$ of 2.5 m/s. This is an improvement over the velocity profile seen in a conventional design with no perforated plate, where $\Delta v$ was 5.00 m/s. Additionally, in FIG. 8D, about 90% of the velocity profile area is within about V - 2.0 m/s to about V m/s.

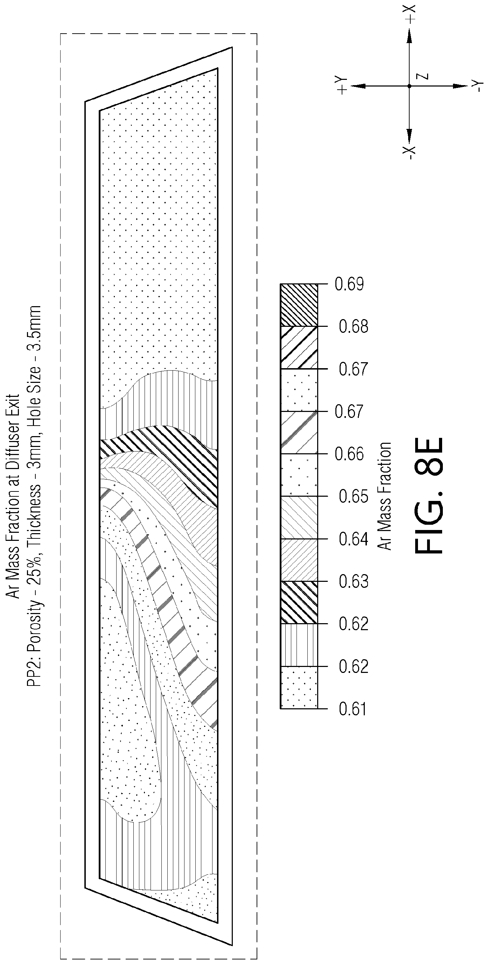

Now referring to FIG. 8E, a CFD model of the composition, or mass fraction, of argon gas at the outlet 520 of the diffuser 510 is depicted for PP2. As shown, the mass fraction at various areas of the outlet 520 of the diffuser 510 ranges from about 0.61 to about 0.68, for a $\Delta w$ of about 0.07.

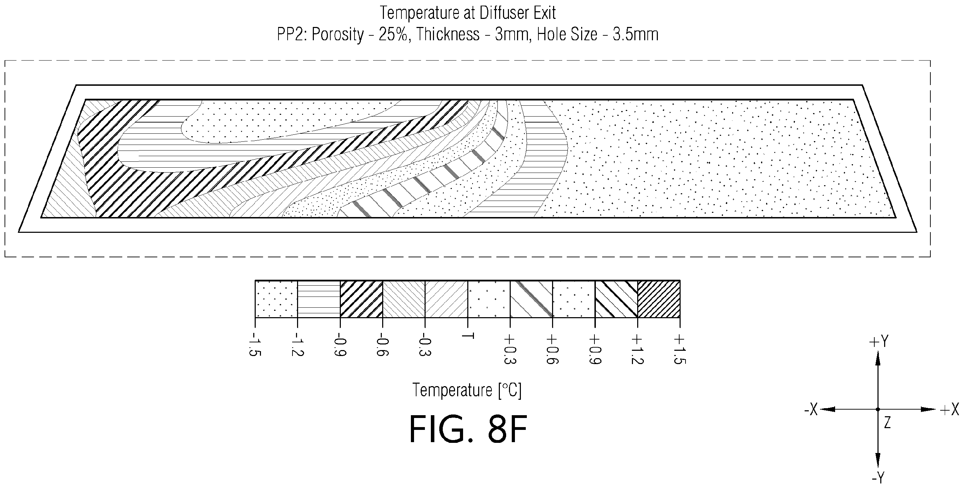

Now referring to FIG. 8F, a CFD model of the temperature profile of the mixed gas 107 across the outlet 520 of the diffuser 510 is depicted for PP2. As shown, the temperature at various areas of the outlet 220 of the diffuser 210 ranges from T $\pm$ 1.35 °C, for a $\Delta T$ of 2.7° C. This $\Delta T$ is same as PP1 above.

**Table 2**

| Case | $\Delta v$ (m/s) | $\Delta w$ | $\Delta T$ (°C) |
|------|---------|------|---------|
| PP1 | 2.50 | 0.08 | 2.7 |
| PP2 | 2.50 | 0.07 | 2.7 |

Table 2 above summarizes the various perforated plate designs described above. Based on this data, the PP2 design with 25% porosity, 3 mm thickness, and 3.5 mm hole size performed better with mixing. However, the modeling of the velocity profiles a slight improvement for PP2 over PP1 with fewer disruptions across the profile.

**Tangential Entry Design** (as **illustrated in FIG. 5**)

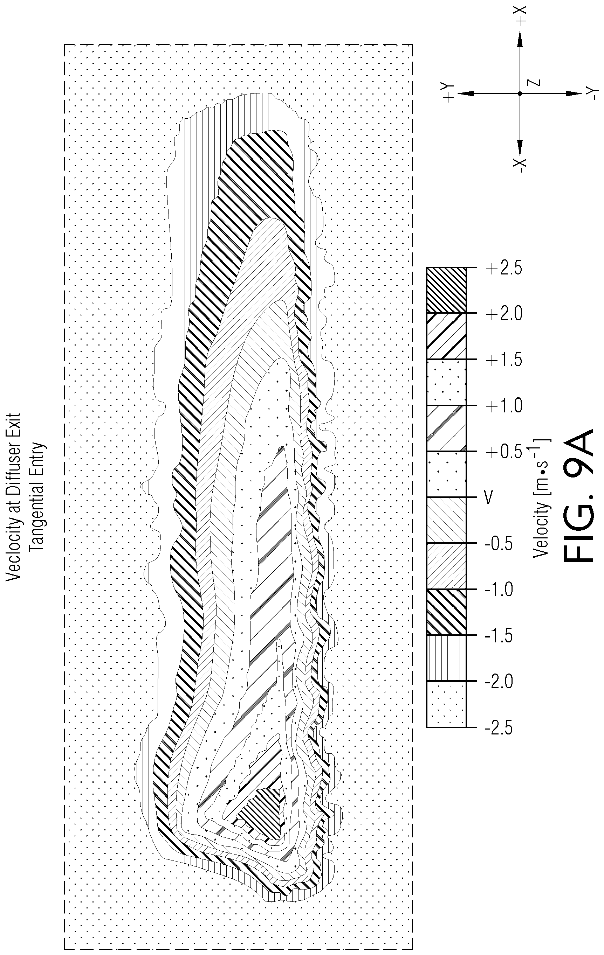

Now referring to FIG. 9A, a CFD model of velocity at the outlet 220 of the diffuser 210 (both shown in FIG. 1) is depicted. As shown, the velocities at various areas of the outlet 220 of the diffuser 210 range from about V - 2.50 m/s to about V + 2.50 m/s, or $\Delta v$, of about 5.00 m/s. This velocity change is the same as the conventional design, and the distribution of the velocity is also on par with the velocity profile of conventional designs. For example, the temperature is lower in the corner of the model corresponding to the negative y and negative x quadrant and higher in the model corresponding to the negative y and positive x quadrant.

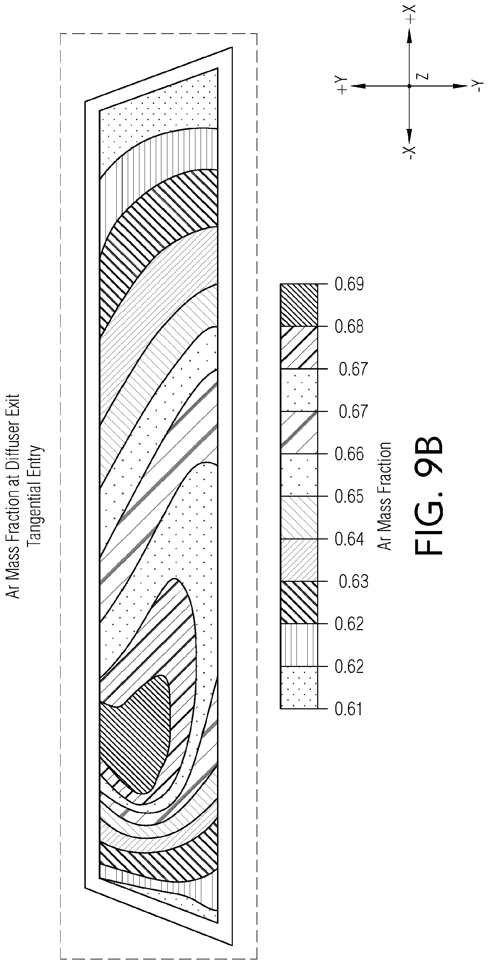

Now referring to FIG. 9B, a CFD model of the composition, or mass fraction, of argon gas at the outlet 220 of the diffuser 210 (both shown in FIG. 1) is depicted. As shown, the mass fraction at various areas of the outlet 220 of the diffuser 210 ranges from about 0.63 to about 0.64, for a $\Delta w$ of about 0.01. As seen in FIG. 9B, the mass fraction between 0.63 and 0.64 over the entire area of the outlet 220.

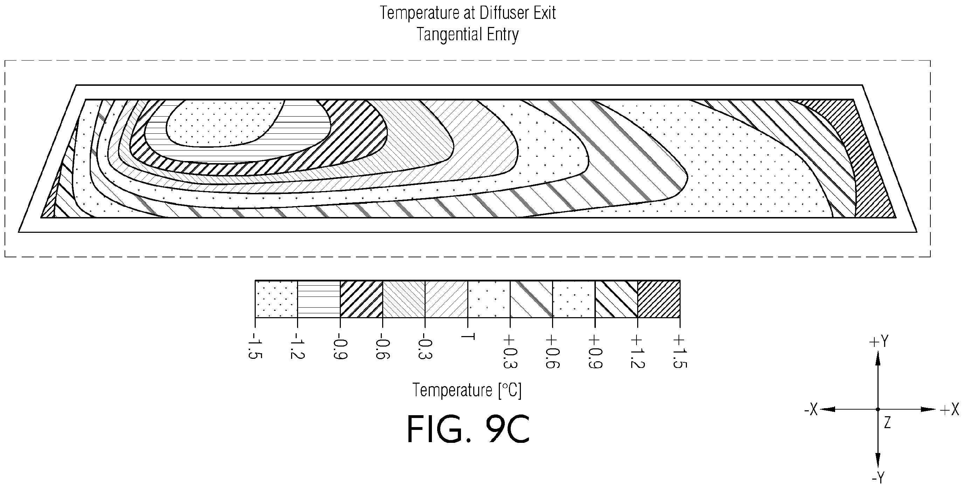

Now referring to FIG. 9C, a CFD model of the temperature profile of the mixed gas 107 across the outlet 220 of the diffuser 210 (both shown in FIG. 1) is depicted. As shown, the temperature at various areas of the outlet 220 of the diffuser 210 ranges from about $T \pm 0.18$ °C, for a $\Delta T$ of about 0.36° C, or about 0.4 °C.

Based on this data, the argon mass fraction and temperature profile at the outlet 220 of the diffuser 210 exhibited better mixing over other designs. However, the velocity profile did not show the same quality of mixing as the argon mass fraction and temperature profile.

### Swirler Design (as illustrated in FIG. 6A)

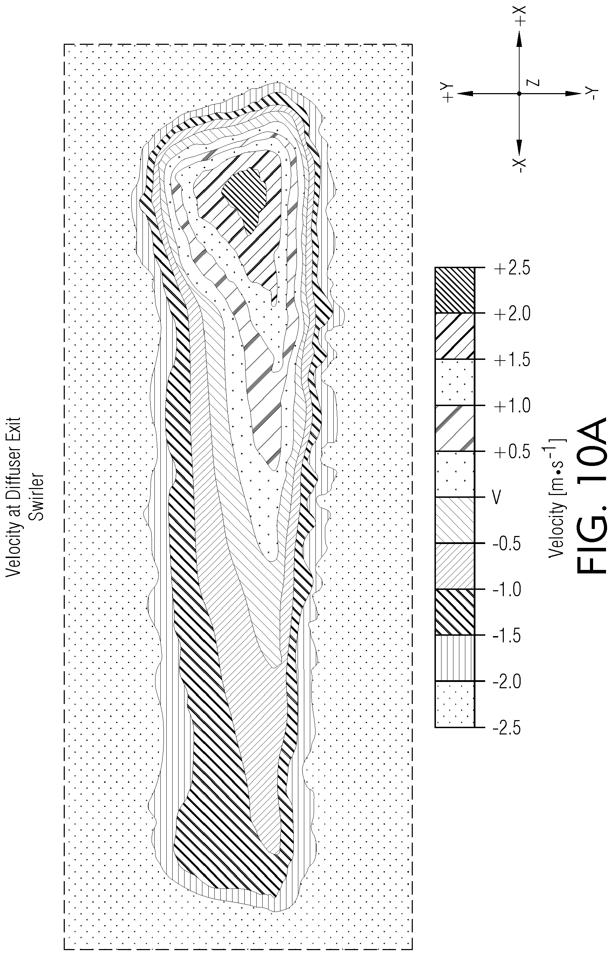

Now referring to FIG. 10A, a CFD model of velocity at the outlet 220 of the diffuser 210 (both shown in FIG. 1) is depicted. As shown, the velocities at various areas of the outlet 220 of the diffuser 210 range from about V - 2.50 m/s to about V + 2.50 m/s, or $\Delta v$, of about 5.00 m/s. The temperature is higher in the corner of the model corresponding to the negative y and positive x quadrant and lower in the corner corresponding to the negative y and negative x quadrant.

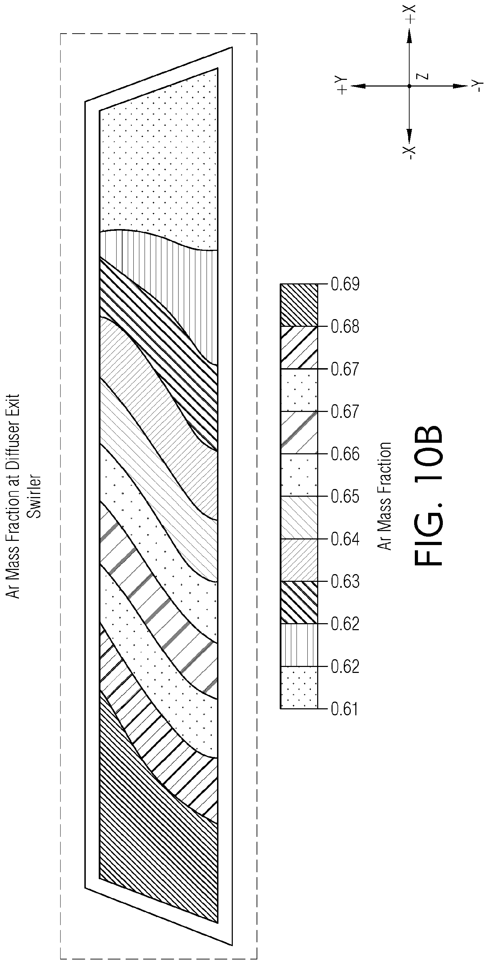

Now referring to FIG. 10B, a CFD model of the composition, or mass fraction, of argon gas at the outlet 220 of the diffuser 210 (both shown in FIG. 1) is depicted. As shown, the mass fraction at various areas of the outlet 220 of the diffuser 210 ranges from about 0.63 to about 0.65, for a $\Delta w$ of about 0.02. As seen in FIG. 10B, the mass fraction between 0.63, 0.64, and 0.65 over the entire area of the outlet 220.

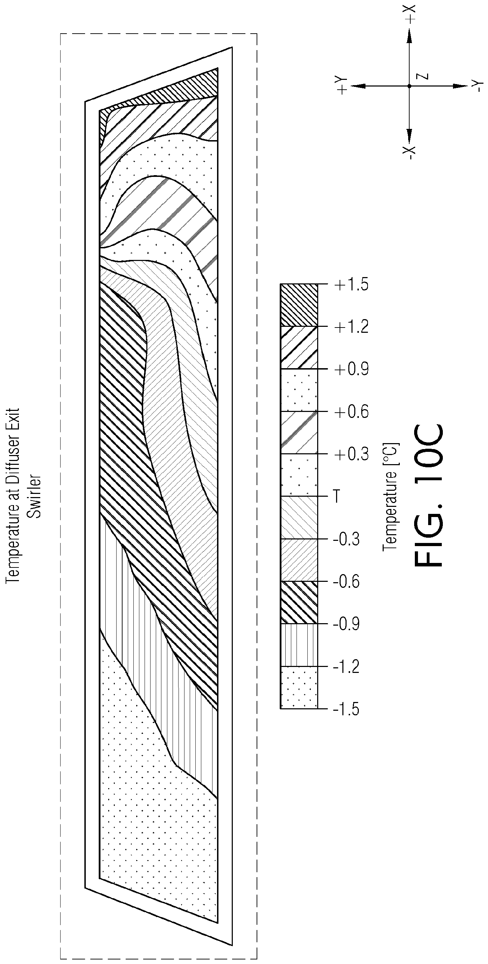

Now referring to FIG. 10C, a CFD model of of the temperature profile of the mixed gas 107 across the outlet 220 of the diffuser 210 (both shown in FIG. 1) is depicted. As shown, the temperature at various areas of the exit of the diffuser at various areas of the exit of the diffuser ranges from about $T \pm 0.43$°C, for a $\Delta T$ of about 0.86 °C, or about 0.9 °C. Compared to some other designs (e.g., perforated plate), the swirler design achieves better mixing of the temperature of the mixed gas across the outlet 220.

Based on this data, the argon mass fraction and temperature profile at the outlet 220 of the diffuser 210 outperformed some other designs and conventional designs with better mixing.

In review of each designed feature, it should be understood that each feature may, by itself, provide some improvement in the mixing of gas flow. However, it should also be understood that combining the various conduits being particularly shaped, sized, and arranged achieves particular characteristics of the gas that is delivered to the process chamber 150.

### Combined Case

In a combined case, the CFD modeling utilizes a T-junction and perforated plate on the diffuser. The T-Junction has a Z of 16 mm. The porosity of the perforated plate is 25%, the thickness of the perforated plate is 3 mm, and the hole size is 3.5 mm.

Now referring to FIG. 12A, a CFD model of the velocity at the outlet 520 of the diffuser 510 (shown in FIG. 4) is depicted. The profile is similar to that of PP2 depicted in FIG. 8D. As shown, the velocity ranges from about V - 2.00 m/s to about V + 0.5 m/s, for a $\Delta v$ of about 2.5 m/s. For example, a majority of the velocity profile appears to be around V - 2.0 m/s to V m/s, with only about a 10% area to be about V + 0.5 m/s. FIG. 12A depicts a similar result to PP2 in FIG. 8D and exhibits the same quality of mixing.

Now referring to FIG. 12B, a CFD model of the composition, or mass fraction, of argon gas at the outlet 520 of the diffuser 510 (both shown in FIG. 4) is depicted. As shown, the mass fraction at various areas of the outlet 520 of the diffuser 510 ranges from about 0.63 to about 0.64, for a $\Delta w$ of about 0.01. FIG. 9

Now referring to FIG. 12C, a CFD model of the temperature profile of the mixed gas 107 across the outlet 520 of the diffuser 510 (both shown in FIG. 4) is depicted. As shown, the temperature at various areas of the outlet 520 of the diffuser 510 ranges from about $T \pm 0.2$ °C, for a $\Delta T$ of about 0.36° C, or about 0.4 °C. FIG. 9 Table 3 summarizes the baseline flow data versus each design and the combined case.

**Table 3**

| | T-Junction Design | Perforated Plate Design | Tangential Entry Design | Swirler Design | Combined Case |
|---|---|---|---|---|---|
| $\Delta v$ (m/s) | 5.00 | 2.50 | 5.00 | 5.00 | 2.50 |
| $\Delta w$ | 0.01 | 0.07 | 0.01 | 0.02 | 0.01 |
| $\Delta T$ (°C) | 0.4 | 2.7 | 0.4 | 0.9 | 0.4 |

It will be apparent to those skilled in the art that various modifications and variations may be made to the embodiments described herein without departing from the spirit and scope of the claimed subject matter. Thus, it is intended that the specification cover the modifications and variations of the various embodiments described herein provided such modification and variations come within the scope of the appended claims and their equivalents.

Further aspects of the invention are provided by the subject matter of the following clauses:

A gas delivery system, comprising: a gas delivery apparatus comprising: a first conduit having an elbow and an outer diameter $D_A$; and a second conduit, having an outer diameter $D_B$, fluidly coupled to the first conduit at a mixing region, the mixing region being positioned downstream of the elbow of the first conduit, and the mixing point being at least a distance Z from a center line of the second conduit to an end of the elbow; and a diffuser fluidly coupled to the first conduit downstream of the mixing region, the diffuser comprising an outlet having a perforated plate.

The gas delivery system of the preceding clause, wherein the gas delivery apparatus is fluidly coupled to a process chamber of the additive manufacturing system, the process chamber being fluidly coupled to the diffuser at the outlet.

The gas delivery apparatus of any preceding clause, wherein the diffuser is configured to provide to the process chamber a mixed gas, the mixed gas exhibiting the following characteristics: a minimal velocity variation, $\Delta v$; a minimal gas mass fraction variation, $\Delta w$; and a minimal temperature variation, $\Delta T$.

The gas delivery system of the preceding clause, wherein $\Delta v$ is of from about 0 ms$^{-1}$ to about 2.50 ms$^{-1}$, $\Delta w$ is of from about 0.01 to about 0.03, and $\Delta T$ is of from about 0.2 °C to about 0.4 °C.

The gas delivery system of any preceding clause, further comprising a swirler disposed within the first conduit upstream of the diffuser.

The gas delivery system of any previous clause, wherein the diffuser directionally changes flow of the mixed gas by 180°.

The gas delivery system of any previous clause, wherein the distance Z is = (0.75 * $D_A$) - (0.25 * $D_A$).

The gas delivery system of any previous clause, wherein $D_B$ is the same as $D_A$.

The gas delivery system of any previous clause, wherein $D_B$ is uniform across a length of the second conduit.

The gas delivery system of any previous clause, wherein $D_B$ decreases across a length near the mixing region. The gas delivery system of any previous clause, wherein the distance Z is = (0.75 * Dz) - (0.25 * Dz), where Dz is the diameter of the second conduit at the mixing region.

The gas delivery system of any previous clause, wherein $D_A$ is of from 25 mm to 35 mm.

The gas delivery system of any previous clause, wherein the perforated plate has a porosity of from 7% to 25%.

The gas delivery system of any previous clause, wherein the perforated plate has a thickness of from about 1 mm to about 5 mm.

An additive manufacturing system comprising: a process chamber; and a gas delivery apparatus, comprising: a first conduit having an elbow and an outer diameter $D_A$; at least one second conduit fluidly coupled to the first conduit at a mixing region, the mixing region being positioned downstream of the elbow of the first conduit, and the mixing point being at least a distance Z from a center line of the at least one second conduit to the elbow; and a diffuser fluidly coupled to the first conduit downstream of the mixing region, the diffuser comprising an outlet having a perforated plate.

The additive manufacturing system of the previous clause, wherein the process chamber is configured to receive a mixed gas, the mixed gas exhibiting the following characteristics: a minimal velocity variation, $\Delta v$; a minimal gas mass fraction variation, $\Delta w$; and a minimal temperature variation, $\Delta T$.

The gas delivery system of the previous clause, wherein $\Delta v$ is of from about 0 ms$^{-1}$ to about 2.50 ms$^{-1}$, $\Delta w$ is of from about 0.01 to about 0.03, and $\Delta T$ is of from about 0.2 °C to about 0.4 °C.

**Claims**

1. A gas delivery system (100) for an additive manufacturing system (10), comprising:

    a gas delivery apparatus (300, 400, 500, 600) comprising:

        a first conduit (303, 403) having an elbow (308, 408) and an outer diameter Da;
        at least one second conduit (304, 404) fluidly coupled to the first conduit (303, 403) at a mixing region (305, 405), the mixing region (305, 405) being positioned downstream of the elbow (308, 408) of the first conduit (303, 403), and the mixing region (305, 405) being at least a distance Z from a center line of the second conduit (304, 404) to an end (313, 413) of the elbow (308, 408); and

        a diffuser (510, 610) fluidly coupled to the first conduit (303, 403) downstream of the mixing region (305, 405), the diffuser (510, 610) comprising an outlet (520) having a perforated plate (522).

2. The gas delivery system (100) of claim 1, wherein the gas delivery apparatus (300, 400, 500, 600) is fluidly coupled to a process chamber (150), the process chamber (150) being fluidly coupled to the diffuser (510, 610) at the outlet (520).

3. The gas delivery system (100) of claim 2, wherein diffuser (510, 610) is configured to provide to the process chamber (150), a mixed gas (107), the mixed gas (107) exhibiting the following characteristics:

   a minimal velocity variation, $\Delta v$;
   a minimal gas mass fraction variation, $\Delta w$; and
   a minimal temperature variation, $\Delta T$.

4. The gas delivery system (100) of claim 3, wherein $\Delta v$ is of from about 0 ms$^{-1}$ to about 2.50 ms$^{-1}$.

5. The gas delivery system (100) of claim 3, wherein $\Delta w$ is of from about 0.01 to about 0.03.

6. The gas delivery system (100) of claim 3, wherein $\Delta T$ is of from about 0.2 °C to about 0.4 °C.

7. The gas delivery system (100) of claim 1, further comprising a swirler (630) disposed within a third conduit (306, 406) upstream of the diffuser (510, 610).

8. The gas delivery system (100) of claim 1, wherein the diffuser (510, 610) directionally changes flow of the mixed gas (107) by 180°.

9. The gas delivery apparatus of claim 1, wherein the distance Z is = $(0.75 * D_A) - (0.25 * D_A)$.

10. The gas delivery apparatus of claim 1, wherein the second conduit (304, 404) has an outer diameter $D_B$.

11. The gas delivery apparatus of claim 1, wherein $D_B$ is uniform across a length of the second conduit (304, 404).

12. The gas delivery apparatus of claim 1, wherein $D_B$ decreases across a length near the mixing region (305, 405).

13. The gas delivery apparatus of claim 12, wherein the distance Z is = $(0.75 * Dz) - (0.25 * Dz)$, where Dz is a diameter (426) of the second conduit (404) at the mixing region (405).

14. The gas delivery apparatus of claim 1, wherein $D_A$ is of from 25 mm to 35 mm.

15. The gas delivery apparatus of claim 1, wherein the perforated plate (522) has a porosity of from 7% to 25%.

FIG. 1
(PRIOR ART)

FIG. 2

EP 4 374 989 A1

FIG. 3

FIG. 4

FIG. 5

FIG. 6A

FIG. 6B

EP 4 374 989 A1

Ar Mass Fraction at Diffuser Exit
TJ1 | Z = 16mm

Ar Mass Fraction

0.61  0.62  0.62  0.63  0.64  0.65  0.66  0.67  0.67  0.68  0.69

FIG. 7A

+Y

-X ← → +X
Z

-Y

Temperature at Diffuser Exit
TJ1 | Z = 16mm

Temperature [°C]

+1.5
+1.2
+0.9
+0.6
+0.3
T
-0.3
-0.6
-0.9
-1.2
-1.5

FIG. 7B

Ar Mass Fraction at Diffuser Exit
TJ2 | Z = 32mm

FIG. 7C

Temperature at Diffuser Exit
TJ2 | Z = 32mm

Temperature [°C]

FIG. 7D

Ar Mass Fraction at Diffuser Exit
TJ3 | Z = 66mm

FIG. 7E

Ar Mass Fraction

0.69
0.68
0.67
0.67
0.66
0.65
0.64
0.63
0.62
0.62
0.61

Temperature at Diffuser Exit
TJ3 | Z = 66mm

Temperature [°C]

+1.5
+1.2
+0.9
+0.6
+0.3
T
-0.3
-0.6
-0.9
-1.2
-1.5

FIG. 7F

Ar Mass Fraction at Diffuser Exit
TJ4 | Z = 160mm

FIG. 7G

Temperature at Diffuser Exit
TJ4 | Z = 160mm

FIG. 7H

Velocity at Diffuser Exit
TJ1 | Z = 16mm

Velocity [m·s⁻¹]

FIG. 7I

EP 4 374 989 A1

Velocity at Diffuser Exit
PP1: Porosity - 7%, Thickness - 3mm, Hole Size - 2.0mm

FIG. 8A

Ar Mass Fraction at Diffuser Exit
PP1: Porosity – 7%, Thickness – 3mm, Hole Size – 2.0mm

FIG. 8B

Temperature at Diffuser Exit
PP1: Porosity - 7%, Thickness - 3mm, Hole Size - 2.0mm

Temperature [°C]

-1.5  -1.2  -0.9  -0.6  -0.3  T  +0.3  +0.6  +0.9  +1.2  +1.5

FIG. 8C

+Y

-X        +X

-Y

Z

Velocity at Diffuser Exit
PP2: Porosity - 25%, Thickness - 3mm, Hole Size - 3.5mm

Velocity [m·s⁻¹]

-2.5  -2.0  -1.5  -1.0  -0.5  V  +0.5  +1.0  +1.5  +2.0  +2.5

+Y
-X ← → +X
Z
-Y

FIG. 8D

Ar Mass Fraction at Diffuser Exit
PP2: Porosity - 25%, Thickness - 3mm, Hole Size - 3.5mm

FIG. 8E

Temperature at Diffuser Exit
PP2: Porosity - 25%, Thickness - 3mm, Hole Size - 3.5mm

Temperature [°C]

-1.5  -1.2  -0.9  -0.6  -0.3  T  +0.3  +0.6  +0.9  +1.2  +1.5

FIG. 8F

+Y

-X  +X

Z

-Y

EP 4 374 989 A1

Veclocity at Diffuser Exit
Tangential Entry

Velocity [m·s$^{-1}$]

-2.5  -2.0  -1.5  -1.0  -0.5  V  +0.5  +1.0  +1.5  +2.0  +2.5

+Y

-X    Z    +X

-Y

FIG. 9A

EP 4 374 989 A1

FIG. 9B

Temperature at Diffuser Exit
Tangential Entry

Temperature [°C]

FIG. 9C

FIG. 10A

FIG. 10B

Temperature at Diffuser Exit
Swirler

Temperature [°C]

+1.5
+1.2
+0.9
+0.6
+0.3
T
-0.3
-0.6
-0.9
-1.2
-1.5

FIG. 10C

+X
+Y
Z
-Y
-X

Velocity at Diffuser Exit
Combined Case A

Velocity [m·s⁻¹]

FIG. 11A

Ar Mass Fraction at Diffuser Exit
Combined Case A

Ar Mass Fraction

FIG. 11B

EP 4 374 989 A1

Temperature at Diffuser Exit
Combined Case A

+X
+Y
Z
-Y
-X

Temperature [°C]

+1.5
+1.2
+0.9
+0.6
+0.3
T
-0.3
-0.6
-0.9
-1.2
-1.5

FIG. 11C

Europäisches
Patentamt

European
Patent Office

Office européen
des brevets

## EUROPEAN SEARCH REPORT

Application Number

EP 23 20 5773

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/361035 A1 (KÄSS MORITZ [DE] ET AL) 19 November 2020 (2020-11-19) * paragraphs [0002], [0025], [0070], [0180] – [0189]; claims; figures * ----- | 1-15 | INV. B22F10/14 B22F10/322 B22F12/70 B29C64/165 |
| Y | US 2020/078864 A1 (MEHL SEBASTIAN [DE]) 12 March 2020 (2020-03-12) * paragraphs [0117] – [0123], [0167]; claims; figures 2,4 * ----- | 1-15 | B29C64/371 B33Y30/00 G06F30/28 |
| A | WO 2019/090377 A1 (AMPRO INNOVATIONS PTY LTD [AU]) 16 May 2019 (2019-05-16) * the whole document * ----- | 1-15 | |
| T | KUMAR GAURAV ET AL: "Review on numerical and experimental investigation of turbulence flow in bend", AIP CONFERENCE PROCEEDINGS, vol. 2341, 13 May 2021 (2021-05-13), page 030017, XP093151129, NEW YORK, US ISSN: 0094-243X, DOI: 10.1063/5.0050014 * the whole document * ----- | 1-15 | |
| | | | TECHNICAL FIELDS SEARCHED (IPC) |
| | | | B22F B29C G06F B33Y |
| T | YIN YIFEI ET AL: "Comparison and analysis of energy loss and flow characteristics of T-junctions via secondary flow and entropy production", BUILDING AND ENVIRONMENT, PERGAMON PRESS, OXFORD, GB, vol. 225, 26 September 2022 (2022-09-26), XP087219518, ISSN: 0360-1323, DOI: 10.1016/J.BUILDENV.2022.109635 [retrieved on 2022-09-26] * the whole document * ----- | 1-15 | |

-/--

The present search report has been drawn up for all claims

| Place of search | Date of completion of the search | Examiner |
|---|---|---|
| The Hague | 19 April 2024 | Ceulemans, Judy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 20 5773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Isaiah Dupree: "Engineering the Perfect Turn: Elbow Fittings in Fluid Flow Systems -TechMeStuff", , 4 September 2023 (2023-09-04), pages 1-10, XP093151907, Retrieved from the Internet: URL:https://techmestuff.com/elbow-fittings -guide/ [retrieved on 2024-04-15] * the whole document * ----- | 1-15 | |
| A | FERRAR B ET AL: "Gas flow effects on selective laser melting (SLM) manufacturing performance", JOURNAL OF MATERIALS PROCESSING TECHNOLOGY, ELSEVIER, NL, vol. 212, no. 2, 26 September 2011 (2011-09-26), pages 355-364, XP028119930, ISSN: 0924-0136, DOI: 10.1016/J.JMATPROTEC.2011.09.020 [retrieved on 2011-10-02] * the whole document * ----- | 1-15 | |
| A | Ansys Learning Point: "Mixing of two fluids ¦ flow through elbow ¦ ANSYS FLUENT", , 8 January 2020 (2020-01-08), XP93153672, Retrieved from the Internet: URL:https://www.youtube.com/watch?v=plgzWE n7fhQ [retrieved on 2024-04-19] * see still at 27:26 * ----- | 1-15 | TECHNICAL FIELDS SEARCHED (IPC) |

The present search report has been drawn up for all claims

| Place of search | Date of completion of the search | Examiner |
|---|---|---|
| The Hague | 19 April 2024 | Ceulemans, Judy |

EPO FORM 1503 03.82 (P04C01)

## ANNEX TO THE EUROPEAN SEARCH REPORT
## ON EUROPEAN PATENT APPLICATION NO.

EP 23 20 5773

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2024

| Patent document cited in search report | | Publication date | Patent family member(s) | | Publication date |
|---|---|---|---|---|---|
| US 2020361035 | A1 | 19-11-2020 | DE 102019207111 | A1 | 19-11-2020 |
| | | | US 2020361035 | A1 | 19-11-2020 |
| US 2020078864 | A1 | 12-03-2020 | DE 102018215302 | A1 | 12-03-2020 |
| | | | EP 3620245 | A1 | 11-03-2020 |
| | | | US 2020078864 | A1 | 12-03-2020 |
| WO 2019090377 | A1 | 16-05-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211065930